(19) Europäisches Patentamt
European Patent Office
Office européen des brevets

(11) Veröffentlichungsnummer: 0 073 266
B1

(12) **EUROPÄISCHE PATENTSCHRIFT**

(45) Veröffentlichungstag der Patentschrift: 13.11.85

(51) Int. Cl.⁴: C 08 L 33/26, E 21 B 43/22, C 08 F 226/02, C 08 F 220/58

(21) Anmeldenummer: 82900100.7

(22) Anmeldetag: 14.12.81

(86) Internationale Anmeldenummer: PCT/EP 81/00193

(87) Internationale Veröffentlichungsnummer: WO 82/02052 (24.06.82 Gazette 82/16)

# (54) WASSERLÖSLICHE VERNETZBARE POLYMERZUSAMMENSETZUNG, IHRE HERSTELLUNG UND IHRE VERWENDUNG.

(30) Priorität: 15.12.80 US 216672

(43) Veröffentlichungstag der Anmeldung: 11.05.83 Patentblatt 83/19

(45) Bekanntmachung des Hinweises auf die Patenterteilung: 13.11.85 Patentblatt 85/46

(84) Benannte Vertragsstaaten: AT BE CH DE FR LI NL

(56) Entgegenhaltungen: EP - A - 0 023 712

(73) Patentinhaber: CASSELLA Aktiengesellschaft, Hanauer Landstrasse 526, D-6000 Frankfurt am Main 61 (DE)
Patentinhaber: DRESSER INDUSTRIES,INC., The Dresser Building Elm & Akard Streets P.O. Box 718, Dallas Texas 75221 (US)

(72) Erfinder: ENGELHARDT, Friedrich, Hünfelder Strasse 20, D-6000 Frankfurt/Main 61 (DE)
Erfinder: PIESCH, Steffen, an der Heide 32, D-6370 Oberursel (DE)
Erfinder: BALZER, Juliane, Steinauer Strasse 4, D-6000 Frankfurt/Main 61 (DE)
Erfinder: DAWSON, Jeffrey C., 21431 Park Run, Katy, TX 77450 (US)

(74) Vertreter: Urbach, Hans-Georg, Dr. et al, Hanauer Landstrasse 526, D-6000 Frankfurt am Main 61 (DE)

EP 0 078 266 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine vernetzbare Polymerzusammensetzung, die in Gegenwart von Säuren vernetzende Brückenglieder der Formel $-NR^x-CH=N-CO-$ ausbildet, die vernetzte Polymerzusammensetzung sowie deren Herstellung. Ferner betrifft die Erfindung die Verwendung der vernetzten Polymerzusammensetzung zum Verdicken wäßriger Säuren, die so verdickten Säuren und deren Einsatz zum Stimulieren von Erdöl und Erdgasbohrungen. Das neue Brückenglied wird erhalten durch die Reaktion eines Makromoleküls, vorzugsweise eines Polymers, das mindestens zwei Carbonamidgruppen enthält, mit einer Verbindung, die mindestens zwei Formylamido-Gruppen enthält, in stark saurem, wäßrigem Medium. Die Bildung des besagten neuen Brückengliedes erfolgt gemäß folgender Reaktionsgleichung:

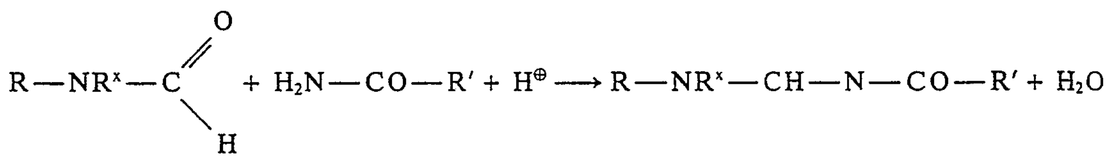

Erfindungsgemäße Zusammensetzungen, welche makromolekulare Verbindungen enthalten, die mindestens zwei Carbonamidgruppen aufweisen und ferner eine Verbindung, die mindestens zwei Formylaminogruppen enthält, können als Verdickungs- oder Gelierungsmittel für wäßrige Säuren eingesetzt werden, wobei durch die wäßrige Säure zwischen den Bestandteilen der Zusammensetzung die oben angegebene Vernetzungsreaktion unter Ausbildung des neuen Brückengliedes erfolgt. Säuren, die auf diese Weise verdickt oder geliert wurden, finden eine bedeutende Anwendung bei der Gewinnung von Erdöl und Erdgas aus unterirdischen Formationen.

Bei der Stimulierung von Bohrungen mit dem Ziel, die Ausbeute an Erdöl bzw. Erdgas aus unterirdischen Carbonatformationen zu vergrößern, kann die Technik der sogenannten Drucksäuerung eingesetzt werden. Carbonatformationen sind beispielsweise Kalkstein, Dolomit oder andere Speicher-Gesteine, welche kalksteinartige Materialien enthalten. In der Regel wird die Drucksäuerung in der Weise ausgeführt, daß man wäßrige Säuren, die gegebenenfalls zusätzlich sogenannte Stützmittel enthalten können, mit einer solchen Geschwindigkeit und unter so hohem Druck in die Bohrung injiziert, daß der vorhandene Formationsdruck überschritten wird, das Gestein nachgibt und so neue Frakturen in die Formation gesprengt werden. Frakturen sind natürlich oder künstlich erzeugte Risse oder Kanäle in der Gesteinsmatrix. Bei dieser Technik der Drucksäuerung werden die Oberflächen der Gesteinsfrakturen durch die Säure angeätzt. Da aber diese Oberflächen ein heterogenes Gefüge aufweisen, wird durch die Ätzung die Oberfläche nicht gleichmäßig, sondern örtlich verschieden stark abgetragen. Sobald der äußere Druck, der durch die Injektion der Säure erzeugt wird, zurückgenommen wird, fallen die Gesteinsfrakturen wieder zusammen. Es tritt jedoch wegen der ungleichmäßigen Anätzung der Oberflächen kein vollständiger Verschluß der Frakturen mehr ein. Wird die Säure in Kombination mit einem sogenannten Stützmittel, zum Beispiel kantengerundeter Quarzsand, injiziert, so werden durch die Einlagerung des Stützmittels zwischen die Oberflächen der Frakturen nach der Wegnahme des externen Druckes auch solche Oberflächenbezirke der Frakturen an der völligen Schließung gehindert, welche von der Säure wenig oder gar nicht angeätzt worden sind. In jedem Fall wird ein Kanal geschaffen, der eine höhere Durchlässigkeit aufweist und es dem Öl oder Gas erlaubt, dem Bohrloch zuzuströmen, wenn der externe Druck zurückgenommen wird. Bei der Drucksäuerung ist es vielfach zweckmäßig, der Säure ein Verdickungs- oder Gelierungsmittel zuzusetzen (vgl. US-Patente 3 415 319; 3 434 971; 3 749 169; 3 236 305; und 3 252 904). Höher viskose Fluids (bei der Sekundär- und Tertiär-Förderung des Erdöls eingesetzte Hilfsflüssigkeiten werden in der Regel als Fluids bezeichnet) haben verschiedene Eigenschaften, die für das Verfahren der Drucksäuerung von Vorteil sind. So ist beispielsweise das Volumen und die lichte Weite einer Fraktur proportional der Viskosität des zu ihrer Erzeugung eingesetzten Fluids. Durch Erhöhung der Viskosität der Säure lassen sich somit beim Verfahren der Drucksäuerung ebenfalls größere Frakturvolumina und größere lichte Weiten der Fraktur hervorrufen. Außerdem ist in höher viskosen Säuren die Ätz-Geschwindigkeit der Oberflächen verringert, und es wird der Säure ermöglicht, tief in die entstandenen Frakturen einzudringen. Darüber hinaus zeigen höher viskose Säuren ein besseres Transport-Verhalten für gegebenenfalls mitverwendete Stützmittel, was zu einer Verbesserung der Ablagerung des Stützmediums in den geöffneten Frakturen führt.

Normalerweise enthalten höher viskose Fluids Homo- oder Copolymere als viskositätserhöhende Mittel. Insbesondere werden in Fluids für die Drucksäuerung als viskositätserhöhende Mittel Copolymerisate verwendet, welche Amidocarbonylgruppen enthalten, wie zum Beispiel Polyacrylamid. Die Polymer-Konzentration in den Fluids liegt in der Regel unterhalb 1,0 Gew.-%. Um die Wirksamkeit der Verdickung von Fluids zu erhöhen, ist es aus der deutschen Offenlegungsschrift 2 657 443 bekannt, Copolymere von Acrylamid durch Zusatz von Aldehyden, wie Formaldehyd, Acetaldehyd oder Glyoxal zu vernetzen. Die Vernetzungsreaktion tritt im alkalischen Bereich bei Normaltemperatur, im sauren Bereich dagegen erst bei Temperaturen von 40 bis 80°C ein. Die Reaktionszeit der Vernetzung kann

dabei bis zu 45 Minuten betragen, so daß dieses Verdickungssystem für die praktische Anwendung, zumindest bei dem Verfahren der Drucksäuerung, nicht geeignet ist.

Die vorliegende Erfindung betrifft neue vernetzte Polymer-Zusammensetzungen, in denen die Vernetzung durch Brückenglieder der Formel $-NR^x-CH=N-CO-$ bewirkt wird, worin $R^x$ Wasserstoff, Alkyl mit 1 bis 4 Kohlenstoffatomen oder $-CH_2OH$ bedeutet. Die Erfindung betrifft ebenfalls die unvernetzten Zusammensetzungen, enthaltend eine makromolekulare Verbindung, die mindestens zwei Amidocarbonylgruppen aufweist und eine andere Verbindung, welche mindestens zwei Formylamidogruppen enthält. Die erfindungsgemäßen unvernetzten Zusammensetzungen vernetzen im sauren wäßrigen Medium unter Bildung der $-NR^x-CH=N-CO$-Brücken. Die Erfindung betrifft ferner Methoden zur Vernetzung der erfindungsgemäßen vernetzbaren Zusammensetzungen. Die Erfindung betrifft weiterhin die Verwendung der erfindungsgemäßen vernetzten Polymer-Zusammensetzungen als Verdicker für Säuren, wobei die Nachteile der bisher bekannten bei der Drucksäuerung eingesetzten Polymeren vermieden werden. Die neuen, erfindungsgemäßen vernetzten Polymer-Zusammensetzungen haben somit vor allen Dingen erhebliche Bedeutung bei der Stimulation von Bohrungen nach dem Verfahren der Drucksäuerung. Sie können jedoch auch mit Vorteil immer dann eingesetzt werden, wenn es zweckmäßig erscheint, die Viskosität von Säuren zu erhöhen, wie beispielsweise bei verschiedenen Verfahren der Metall-Reinigung.

Die erfindungsgemäßen Polymer-Zusammensetzungen haben für das Verfahren der Drucksäuerung den weiteren Vorteil, daß sie im sauren Medium auch bei längerer Einwirkung nicht zur Abscheidung von unlöslichen Niederschlägen neigen, wie dies bei herkömmlichen Verdickungsmitteln der Fall ist. Niederschläge und Ausfällungen, wie sie bei der Verwendung bekannter Verdicker auftreten können, haben die Tendenz, die unterirdischen Formationen zu verstopfen und abzudichten, und sie gefährden so ernsthaft den Erfolg der Stimulation der Bohrung, ja sie können zum völligen Versiegen der Förderung führen. Beim chemischen Abbau der erfindungsgemäßen Polymer-Zusammensetzungen entstehen Polymerketten, welche Aminogruppen enthalten und daher in dem sauren Medium vollständig und rückstandsfrei löslich sind.

Die erfindungsgemäßen vernetzbaren Polymer-Zusammensetzungen enthalten

A) ein wasserlösliches Homo- oder Copolymerisat, das Amidocarbonylgruppen aufweist und

B) a) eine bis-Acylamidoverbindung der Formel I

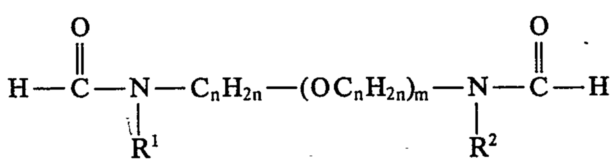

(I)

worin

$R^1$ und $R^2$ Wasserstoff, Alkyl mit 1 bis 4 Kohlenstoffatomen oder $-CH_2OH$,
n eine Zahl von 1 bis 3 und
m 0 oder 1 bedeuten

und/oder

b) ein wasserlösliches Homo- oder Copolymerisat, welches Formylamidogruppen der Formel

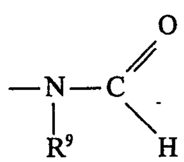

aufweist,
worin $R^9$ für Wasserstoff, Alkyl mit 1 bis 4 Kohlenstoffatomen oder $-CH_2OH$ steht. Die erfindungsgemäße vernetzbare Polymer-Zusammensetzung kann einen oder verschiedene der Bestandteile A) und/oder B) aufweisen.

Die Bestandteile A) und B) sind in den erfindungsgemäßen vernetzbaren Zusammensetzungen in einem Gewichtsverhältnis von 1 :0,2 bis 1 :20, vorzugsweise von 1 :0,2 bis 1 :1, enthalten.

Grundsätzlich kann das Homo- oder Copolymerisat des Bestandteils A) vor der Vernetzung jedes beliebige Makromolekül sein, vorzugsweise jedes beliebige Polymer, welches in Wasser eine ausreichende Löslichkeit besitzt und in seinem Makromolekül so viele Carbonamidgruppen (mindestens 2) aufweist, daß eine Vernetzung über das neue Brückenglied der Formel $-NH^x-CH=N-CO-$ eintreten kann. Je nachdem welches Vernetzungsmittel (Bestandteil B) in der erfindungsgemäßen Zusammensetzung vorliegt, hat das Symbol $R^x$ des Brückengliedes die Bedeutungen von $R^1$, $R^2$ oder $R^9$. Die Wasserlöslichkeit des Bestandteils A) sollte nicht niedriger als 10 g/l sein, und der Gehalt an Carbonamidgruppen sollte mindestens 10%, vorzugsweise mindestens 15%, bezogen auf das Gewicht des Makromoleküls, betragen.

Besonders geeignet als Komponente A) der erfindungsgemäßen Zusammensetzungen sind Homo- oder Copolymere, die vor der Vernetzung 50 bis 100 Gew.-% von Einheiten der Formel II

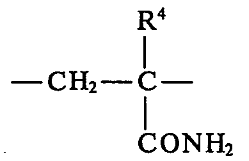

(II)

worin $R^4$ für Wasserstoff oder Methyl steht, und 0 bis 50 Gew.-% Einheiten der Formel III

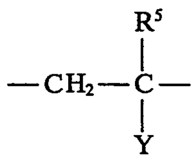

(III)

enthalten, worin

$R^5$ für Wasserstoff oder Alkyl mit 1 bis 3 Kohlenstoffatomen, vorzugsweise für Wasserstoff und Methyl, steht und

Y Formylamido; N-substituiertes Formylamido, wobei der N-Substituent Methyl oder Hydroxymethyl ist; Cyan; Carboxyl oder dessen Alkali- oder Ammoniumsalz; Alkoxycarbonyl mit 1 bis 6, vorzugsweise 1 bis 3, Kohlenstoffatomen; Hydroxy-Alkoxycarbonyl mit 1 bis 3 Kohlenstoffatomen; N-Methylolcarbonamid der Formel $HOCH_2NH{-}CO{-}$, dessen Methylolgruppe gegebenenfalls mit Alkanolen von 1 bis 4 Kohlenstoffatomen veräthert ist; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei die Sulfonsäure- und Phosphonsäuregruppen auch in Form ihrer Alkali- oder Ammoniumsalze vorliegen können;

ein Rest der Formel IV

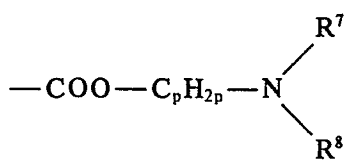

(IV)

ein Rest der Formel V

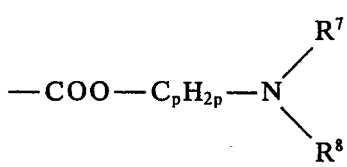

(V)

wobei die Reste der Formeln IV und V auch quaterniert sein können, z. B. durch Umsetzung mit $CH_3{-}Cl$ oder Dimethylsulfat, und wobei $R^7$ und $R^8$ gleich oder verschieden sind und für Alkyl mit 1 bis 4, vorzugsweise 1 oder 2, Kohlenstoffatomen stehen und worin p eine Zahl von 1 bis 4 bedeutet, ist.

Bevorzugt sind als Komponente A) solche Homo- oder Copolymeren, die vor ihrer Vernetzung 60 bis 85 Gew.-% Einheiten der Formel II und 15 bis 40 Gew.-% Einheiten der Formel III enthalten.

Außerdem sind bevorzugt für die Komponente A) solche Homo- oder Copolymere einzusetzen, in denen $R^5$ Wasserstoff oder Methyl bedeutet und/oder in denen Y Carboxyl; die Sulfonsäuregruppe; 3-Sulfo-2-methyl-propyl-(2)-carbonamid der Formel

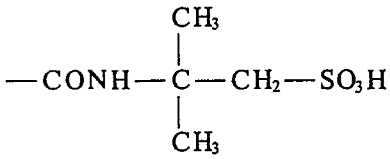

Alkanoylamino mit 1 bis 4 Kohlenstoffatomen, das gegebenenfalls durch Methylol oder Alkyl 1 bis 4 Kohlenstoffatomen N-substituiert sein kann; Pyrrolidonyl-(1) oder ein Rest der obenangegebenen und definierten Formeln IV oder V bedeuten, wobei alle Säuregruppen auch in Form der Natrium-, Kalium- oder Ammoniumsalze vorliegen können.

Von den erfindungsgemäßen Zusammensetzungen, die als Komponente B) eine bis-Acylamido-Verbindung der Formel I enthalten, sind diejenigen bevorzugt, bei denen $R^1$ und $R^2$ Wasserstoff oder Methylol und n die Zahl 1 bedeuten.

Als Homo- oder Copolymerisat für die Komponente B) der erfindungsgemäßen Zusammensetzungen kann jedwedes Polymer eingesetzt werden, das eine ausreichende Löslichkeit in Wasser aufweist, d. h. dessen Löslichkeit nicht weniger als 10 g/l betragen soll.

Die Komponente B) der erfindungsgemäßen Zusammensetzungen muß einen ausreichenden Anteil von Formylamidogruppen enthalten, um die erfindungsgemäßen vernetzenden Brückenglieder zu bilden. Ein ausreichender Anteil von Formylamidogruppen sollte nicht geringer sein als 1 g Mol Formylamido-Gruppen, entsprechend z. B. 71 g N-Vinylformamid pro 500 g des Polymerisats.

Als Komponente B) der erfindungsgemäßen Zusammensetzungen sind solche Homo- oder Copolymerisate besonders geeignet, die vor der Vernetzung aus 50 bis 100 Gew.-% Einheiten der Formel VI

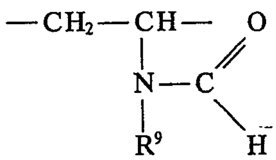

(VI)

worin $R^9$ für Wasserstoff, Methyl oder Hydroxymethyl, vorzugsweise für Wasserstoff und Methyl steht, und 0 bis 50 Gew.-% Einheiten der Formel

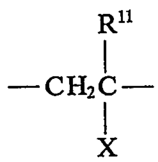

(VII)

bestehen, wobei

$R^{11}$ für Wasserstoff oder Methyl steht und

X Cyan; Carbonyl oder dessen Alkali- oder Ammoniumsalze; Alkoxycarbonyl mit 1 bis 6, vorzugsweise 1 bis 3, Kohlenstoffatomen; Hydroxy-alkoxycarbonyl mit 1 bis 3 Kohlenstoffatomen; Amidocarbonyl; N-Methylolamidocarbonyl der Formel $HOCH_2NH-CO-$, dessen Methylolgruppe gegebenenfalls mit Alkanolen mit 1 bis 4 Kohlenstoffatomen veräthert sein kann; Alkanoylamino mit 1 bis 4 Kohlenstoffatomen, das durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei Sulfon- und Phosphonsäuregruppen auch in Form ihrer Alkali- oder Ammonium-Salze vorliegen können;

ein Rest der Formel VIII

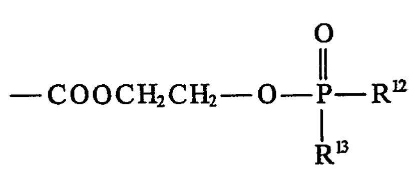

(VIII)

worin $R^{12}$ oder $R^{13}$ gleich oder verschieden sind und für Alkyl mit 1 bis 4, vorzugsweise 1 oder 2, Kohlenstoffatomen stehen, ein Rest der Formel IX

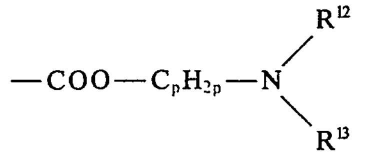

(IX)

worin $R^{12}$ und $R^{13}$ die oben angegebenen Bedeutungen haben und p für eine Zahl von 1 bis 4 steht, oder ein Rest der Formel (X)

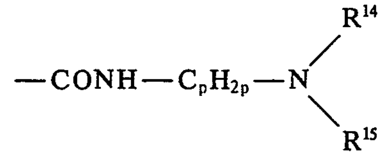

(X)

worin $R^{14}$ und $R^{15}$ gleich oder verschieden sind und für Alkyl mit 1 bis 4, vorzugsweise 1 oder 2, Kohlenstoffatomen stehen oder die beispielsweise durch $CH_3Cl$ oder Dimethylsulfat quaternierten Reste der Formeln IX und (X) ist.

Bevorzugt als Komponente B) sind solche Homo- oder Copolymerisate, die vor der Vernetzung 60 bis 95 Gew.-% von Einheiten der Formel VI und 5 bis 40 Gew.-% von Einheiten der Formel VII enthalten.

Ferner werden vorzugsweise solche Homo- oder Copolymerisate als Komponente B) in erfindungsgemäße Zusammensetzungen eingesetzt, in denen X Carboxyl; die Sulfonsäuregruppe; 3-Sulfo-2-methylpropyl-(2)-carbonamid der Formel

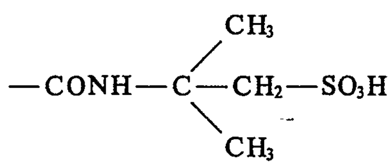

Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1) oder einen Rest der oben angegebenen und definierten Formeln IX und (X) bedeutet, wobei jede Säuregruppe auch als Natrium, Kalium oder Ammoniumsalze vorliegen kann.

Vorzugsweise werden als Komponente A) und B) solche Copolymere eingesetzt, die vor der Vernetzung K-Werte von 15 bis 300 aufweisen (vgl. Fikentscher »Cellulosechemie« Bd. 13, S. 58 (1932)).

Es versteht sich von selbst, daß die erfindungsgemäß eingesetzten Copolymere mehrere verschiedene im Rahmen der Definitionen und X und Y mögliche Reste enthalten können. In der Regel haben die Symbole X und Y, wenn sie in ein und demselben Makromolekül enthalten sind, nicht mehr als 3, vorzugsweise 2, verschiedene Bedeutungen. Copolymere dieser Art werden hergestellt indem man mehrere, in der Regel nicht mehr als 3, vorzugsweise 2, verschiedene Comonomere, die unterschiedliche Reste X beziehungsweise Y enthalten bei der Polymerisation einsetzt.

Die erfindungsgemäßen Homo- oder Copolymer-Zusammensetzungen sind vor der Vernetzung in Wasser glatt löslich und liefern Lösungen von mittlerer Viskosität. Diese Lösungen sind leicht zu handhaben, und sie behalten diese Eigenschaft auch bei, solange sie nicht durch Zusatz von Säuren sauer gestellt, insbesondere auf einen pH-Wert von 3 oder darunter, eingestellt werden. Im Gegensatz zu bekannten Kombinationen aus Polymeren und Aldehyden sind die erfindungsgemäßen Zusammensetzungen in Abwesenheit von Säuren für unbegrenzte Zeit lagerfähig. Werden den wäßrigen Lösungen erfindungsgemäßer Zusammensetzungen Säuren zugefügt, so setzt die Vernetzungsreaktion zwischen den Amidocarbonylgruppen der Komponente A) und den Formylamidogruppen der Komponente B) unter Ausbildung der charakteristischen Brückenglieder der Formel $-NR^x-CH=N-CO-$ ein. Die polymeren Ketten vernetzen dadurch zu dem dreidimensionalen Polymeren-Netzwerk, und es erfolgt sprunghaft ein drastischer Anstieg der Viskosität der wäßrigen Lösungen. Aus diesem Grunde können die erfindungsgemäßen Zusammensetzungen benutzt werden, um die Viskosität von Säuren zu erhöhen. Je nach der Menge der erfindungsgemäßen Zusammensetzung, die einer bestimmten Säuremenge zugefügt wird, läßt sich die Viskosität innerhalb eines weiten Bereiches variieren. Die untere Grenze dieses Bereichs ist die Viskosität der reinen Säure, die frei ist von Copolymeren. Auf der anderen Seite können durch einen ausreichenden Zusatz an erfindungsgemäßer Zusammensetzung Gele des erfindungsgemäßen vernetzten Polymers erhalten werden, die nicht mehr frei fließen, sondern völlig formstabil sind. Zwischen diesen Extremen kann jede beliebige Viskosität eingestellt werden durch einfache Variation des Anteils an erfindungsgemäßer Polymerzusammensetzung in der Säure.

Bei der Anwendung zur Drucksäuerung beträgt die Konzentration Acrylamido-Homo- oder Copolymerisats (Komponente A) je nach Polymer-Eigenschaften, Behandlungsbedingungen der Bohrung und der Lagerstätten-Beschaffenheit normalerweise 0,24 bis 0,72 Gew.-%, bezogen auf das Gesamtgewicht des Spaltungs- oder Behandlungsfluids. Die Vernetzersubstanz (Komponente B) hat in der

Regel eine Konzentration von 0,05 bis 1 Gew.-%, vorzugsweise 0,25 bis 0,6 Gew.-%, des Spaltungs- bzw. Behandlungsfluids. Das Acrylamido-Homo- oder Copolymerisat wird der wäßrigen Phase entweder als feines Pulver, als Dispersion in Kohlenwasserstoffen, vorzugsweise mit einem Gehalt von 20 bis 50 Gew.-% der Komponente A) oder als eine Öl-in-Wasser oder Wasser-in-Öl-Emulsion, die normalerweise 20 bis 50 Gew.-% der Komponente A) enthält, zugesetzt. Das bevorzugte System ist eine Emulsion mit dem höchstmöglichen Gehalt an Komponente A), der normalerweise bei 25 bis 75 Gew.-% liegt. Geeignete Öle für die Herstellung solcher Wasser-in-Öl-Emulsionen sind beispielsweise verzweigte oder unverzweigte Paraffin-Kohlenwasserstoffe mit einem Siedepunkt von 150 bis 250°C.

Die Vernetzersubstanz (Komponente B) wird normalerweise in Form einer wäßrigen Lösung mit bis zu 50 Gew.-% der Vernetzungssubstanz, als feines Pulver, als eine Kohlenwasserstoff-Dispersion mit 20 bis 50 Gew.-% der Vernetzersubstanz, oder als Wasser-in-Öl oder Öl-in-Wasser-Emulsion mit 20 bis 50 Gew.-% der Vernetzersubstanz eingesetzt. Bevorzugt erfolgt der Einsatz als wäßrige Lösung mit ca. 50 Gew.-% Vernetzersubstanz.

Löst man das Acrylamido-Homo- oder Copolymerisat in der bevorzugten Konzentration von 0,24 bis 0,72 Gew.-% und die Vernetzersubstanz in der bevorzugten Konzentration von 0,25 bis 0,5 Gew.-% gemeinsam in Wasser, so erhält man eine Lösung, die lediglich eine mittlere Viskosität von 20 bis 60 cp aufweist, gemessen in einem Fann-35 Viscosimeter bei einem Schergefälle von 511 $sec^{-1}$.

Die Lösung behält diese Viskosität bei, bis sie mit einer Bronsted-Lowery-Säure versetzt wird. Der Säure-Zusatz bewirkt das Eintreten der Vernetzungsreaktion zwischen Acrylamido-Homo- oder Copolymerisat und dem Formylamidogruppen enthaltenden Vernetzer unter Ausbildung des neuen über Brückenglieder der Formel $-NR^x-CH=N-CO-$ vernetzten erfindungsgemäßen Copolymers. Hierbei steigt die Viskosität der wäßrigen Lösung üblicherweise bis über 300 cp an, gemessen unter den oben angegebenen Bedingungen (Fann-35 Viscosimeter bei einem Schergefälle von 511 $sec^{-1}$).

Erfindungsgemäß verdickte Säuren bzw. erfindungsgemäße Säuregele enthalten in der Regel 70 bis 99,8 Gew.-% einer oder mehrerer der obengannnten Säuren und 0,2 bis 30 Gew.-% der über charakteristische Brückenglieder der Formel $-NR^x-CH=N-CO-$ vernetzten erfindungsgemäßen Polymerzusammensetzungen.

Vorzugsweise haben im wesentlichen alle Brückenglieder — zumindest 50% und vorzugsweise zumindest 70% der Brückenglieder — die oben genannte Formel. Es können jedoch in dem vernetzten Polymer auch andere bekannte vernetzende Brücken in untergeordneter Masse vorhanden sein. Solche bekannten Brückenglieder können sich unter Umständen durch Reaktion anderer reaktiver Gruppen in den Komponenten A) oder B) der erfindungsgemäßen Polymerzusammensetzung und/oder aufgrund des Zusatzes anderer bekannter Vernetzer ausbilden.

Wie bereits oben erwähnt, sind die Amidocarbonylgruppen der Komponente A) an Makromoleküle gebunden. Es hat sich nämlich gezeigt, daß die Makromoleküle die bei der Vernetzungsreaktion sich bildenden Brückenglieder der obigen Formel zu stabilisieren scheinen. Sind die Amidocarbonylgruppen dagegen an Moleküle mit zu geringer Größe gebunden, so werden gar keine oder nur eine geringe Anzahl der besagten Brückenglieder stabilisiert. Es scheint als ob in diesem Fall die Brücken in Folge von Hydrolyse zu Ameisensäure, Ammonium, Carbonsäuregruppen und möglicherweise anderen Spaltprodukten abgebaut werden.

Die übliche Methode, erfindungsgemäße Säure-Gele herzustellen, besteht darin, die gewünschte, insbesondere die bevorzugte Konzentration an Acrylamido-Homo- oder Copolymerisat einer wäßrigen Lösung der Säure zuzusetzen und die Hydratisierung des Polymers abzuwarten, was üblicherweise 3 bis 45 Min. in Anspruch nimmt. Grundsätzlich kann jede Säure oder jede wäßrige Lösung einer Säure in erfindungsgemäßer Weise verdickt werden. Für die Anwendung zur Drucksäuerung werden normalerweise Säurekonzentrationen von 1/4 bis 28 Gew.-% eingesetzt. Bevorzugt sind dabei Salzsäure, Essigsäure oder Ameisensäure. Je nach den Bedingungen der Bohrlochbehandlung und nach der Lagerstätten-Beschaffenheit werden Säurekonzentrationen von 3 bis 15 Gew.-% bevorzugt. Wenn die mit dem Acrylamido-Homo- oder Copolymerisat versetzte Säure 90% der von dem hydratisierten Polymer herrührende Viskosität erreicht hat, wird die gewünschte, insbesondere die bevorzugte, Menge an Vernetzersubstanz, nämlich 0,25 bis 0,5 Gew.-%, zugefügt. Nach diesem Zusatz erfolgt alsbald ein drastischer Anstieg der Viskosität, bedingt durch die Bildung des neuen erfindungsgemäßen dreidimensional vernetzten Polymeren. Selbstverständlich kann die Vereinigung der Komponenten der erfindungsgemäßen Zusammensetzung und der Säure auf beliebige andere Weise erfolgen und führt in jedem Falle zu Säuregelen oder zu hochviskosen Säurepräparaten.

Die hohe Viskosität der erfindungsgemäß verdickten Säuren bleibt bei Raumtemperatur über lange Zeiträume, beispielsweise länger als drei Monate, erhalten. Bei erhöhten Temperaturen, beispielsweise oberhalb 50°, vorzugsweise oberhalb 80°C, sinkt die Viskosität ab und die hoch viskosen oder gelierten Säuren gehen in Flüssigkeiten von geringer Viskosität über.

Dieser Übergang beruht auf einem hydrolytischen Abbau der dreidimensional vernetzten erfindungsgemäßen Polymeren zu linearen Polymer-Ketten. Die Zeit, die für den Übergang von einem Gel zu dem niederviskosen flüssigen Zustand erforderlich ist, hängt bis zu einem gewissen Grad von dem Aufbau des Polymer-Moleküls ab und kann daher innerhalb gewisser Grenzen durch Auswahl bestimmter Monomeren-Bausteine und bestimmter Monomeren-Verhältnisse variiert werden.

Die für den Abbau benötigte Zeit liegt jedoch in der Regel nicht über 12 Stunden.

Grundsätzlich können alle sauren oder wäßrigen Lösungen in erfindungsgemäßer Weise verdickt werden. Säuren, die bei der Normaltemperatur fest sind, wie z. B. aromatische Sulfonsäuren, müssen in Form wäßriger Lösung verwendet werden. Bevorzugt sind solche Säuren, die normalerweise flüssig sind und im Hinblick auf ihren wirtschaftlichen Einsatz auf dem Gebiet der Erdöl-Gewinnung stark preisgünstig sind. Es kommen daher in erster Linie starke anorganische und starke niedere organische Säure in Betracht.

Beispiele für Säuren, die in erfindungsgemäßer Weise verdickt werden können, sind Salzsäure, Schwefelsäure, Salpetersäure, Perchlorsäure, Phosphorsäure, Flußsäure, Ameisensäure, Essigsäure, Monochloressigsäure, Dichloressigsäure und Trichloressigsäure.

Bevorzugte Säuren für die Erdöl-Gewinnung sind Salzsäure, Flußsäure, Ameisensäure und Essigsäure.

Die als Komponente A) erfindungsgemäße Zusammensetzungen eingesetzten Homo- oder Copolymerisate werden durch Polymerisation bzw. Copolymerisation von 50 bis 100 Gew.-%, vorzugsweise 60 bis 85 Gew.-%, Acrylamid und/oder Methacrylamid und 0 bis 50 Gew.-%, vorzugsweise 15 bis 40 Gew.-%, eines Comonomeren der Formel IIIa

$$CH_2{=}\overset{\displaystyle R^5}{\overset{|}{C}}{-}Y \qquad \text{(IIIa)}$$

worin $R^5$ und Y die oben angegebenen Bedeutungen haben, hergestellt.

Monomere der Formel IIIa, die zur Copolymerisation mit Acrylamid und/oder Methacrylamid zu Komponenten A) erfindungsgemäßer Zusammensetzungen geeignet sind, sind beispielsweise:

| $R^5$ | $-H$ | $-CH_3$ | $-H$ | $-CH_3$ | $-H$ | $-H$ |
|---|---|---|---|---|---|---|
| Y | $-CN$ | $-CN$ | $-COOH$① | $-COOH$① | $-COOCH_3$ | $-NH-CHO$ |

| $R^5$ | $-CH_3$ | $-H$ | $-CH_3$ | $-H$ | $-CH_3$ |
|---|---|---|---|---|---|
| Y | $-COOCH_3$ | $-COOC_2H_5$ | $-COOC_2H_5$ | $-COOC_4H_9$ | $-COOC_4H_9$ |

| $R^5$ | $-H$ | $-H$ | $-CH_3$ | $-H$ | $-CH_3$ |
|---|---|---|---|---|---|
| Y | $-COOC_6H_{13}$ | $-COOC_2H_4OH$ | $-COOC_2H_4OH$ | $-COOC_3H_6OH$ | $-COOC_3H_6OH$ |

| $R^5$ | $-H$ | $-CH_3$ | $-H$ | $-CH_3$ |
|---|---|---|---|---|
| Y | $-CONHCH_2OH$ | $-CONHCH_2OH$ | $-CONHCH_2OCH_3$ | $-CONHCH_2OCH_3$ |

| $R^5$ | $-H$ | $-CH_3$ | $-H$ |
|---|---|---|---|
| Y | $-CONHCH_2OC_2H_5$ | $-CONHCH_2OC_2H_5$ | $-CONHCH_2OC_4H_9$ |

| $R^5$ | $-H$ | $-H$ | $-H$ | $-CH_3$ |
|---|---|---|---|---|
| Y | $-NHCOCH_3$ | $-NHCOC_2H_5$ | $-NHCOC_3H_7$ | $-N-CHO$<br>\|<br>$CH_2OH$ |

| $R^5$ | $-H$ | $-H$ | $-H$ | $-CH_3$ | $-H$ |
|---|---|---|---|---|---|
| Y | $-N-COCH_3$<br>\|<br>$CH_2OH$ | $-N-COC_2H_5$<br>\|<br>$CH_2OH$ | $-N-COC_3H_7$<br>\|<br>$CH_2OH$ | $-N-CHO$<br>\|<br>$CH_3$ | $-N-CHO$<br>\|<br>$CH_2-OH$ |

| $R^5$ | $-H$ | $-H$ | | $-H$ |
|---|---|---|---|---|
| Y | $-N-COCH_3$<br>\|<br>$CH_3$ | $-N-COC_3H_6$<br>\|<br>$CH_3$ | | $-N-COC_2H_5$<br>\|<br>$C_2H_5$ |

| | | | | | |
|---|---|---|---|---|---|
| $R^5$ | —H | —H | —$CH_3$ | —H | —H |
| Y | 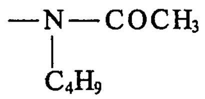 | 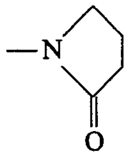 | 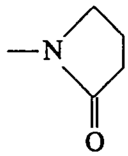 | 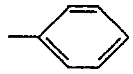 | —$SO_3H^{\oplus}$ |

| | | | |
|---|---|---|---|
| $R^5$ | —$CH_3$ | —H | —$CH_3$ |
| Y | —$SO_3H^{\oplus}$ | —$PO_3H_2^{\oplus}$ | —$PO_3H_2^{\oplus}$ |

| | | |
|---|---|---|
| $R^5$ | —H | —H |
| Y | —CONH—$CH_2SO_3H^{\oplus}$ | —$CONHCH_2CH_2CH_2SO_3H^{\oplus}$ |

| | | |
|---|---|---|
| $R^5$ | —H | —H |
| Y | —$CONHC_2H_4$—$SO_3H^{\oplus}$ | 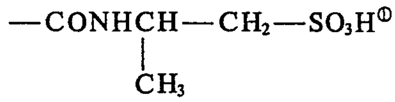 |

| | | |
|---|---|---|
| $R^5$ | —H | —H |
| Y | —CO—NH—$CH_2CH_2CH_2CH_2$—$SO_3H^{\oplus}$ | 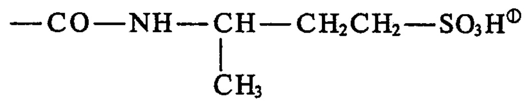 |

| | |
|---|---|
| $R^5$ | —H |
| Y | 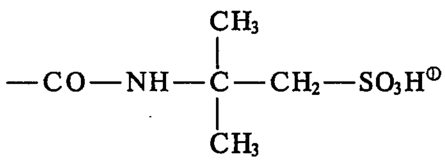 |

| | | |
|---|---|---|
| $R^5$ | —$CH_3$ | —$CH_3$ |
| Y | —CONH—$C_2H_4SO_3H^{\oplus}$ | 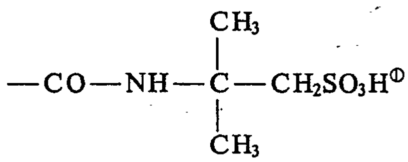 |

| | | |
|---|---|---|
| $R^5$ | —H | —$CH_3$ |
| Y | 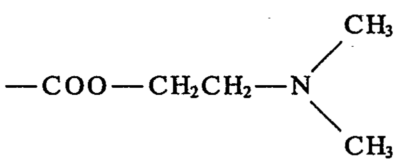 | 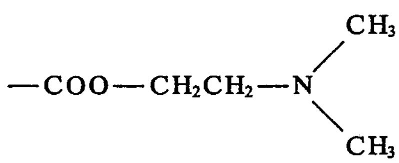 |

| | | |
|---|---|---|
| $R^5$ | —H | —$CH_3$ |
| Y | 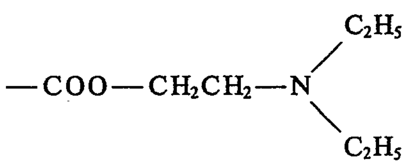 | 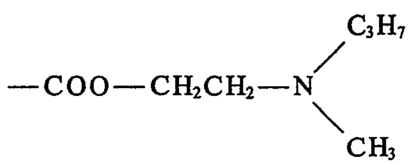 |

| | | |
|---|---|---|
| $R^5$ | $-H$ | $-H$ |
| Y | 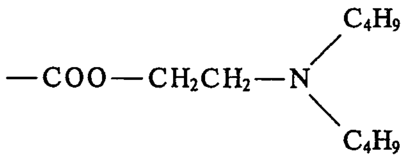 | 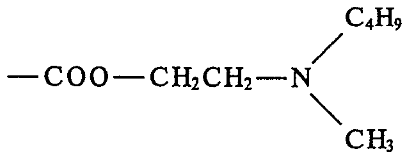 |

| | | |
|---|---|---|
| $R^5$ | $-H$ | $-CH_3$ |
| Y | 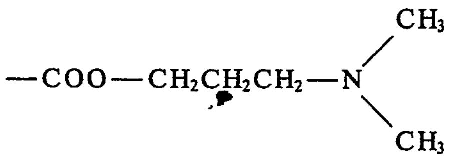 | 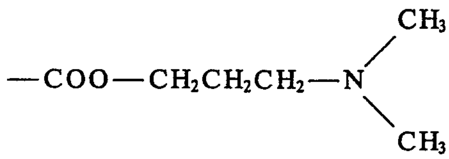 |

| | | |
|---|---|---|
| $R^5$ | $-H$ | $-CH_3$ |
| Y | 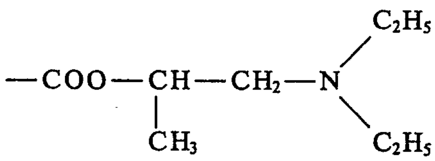 | 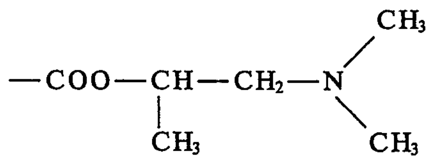 |

| | | |
|---|---|---|
| $R^5$ | $-H$ | $-CH_3$ |
| Y | 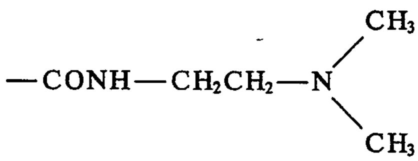 | 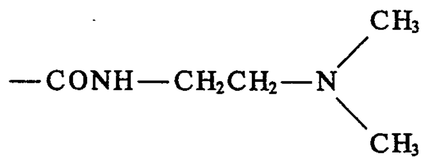 |

| | | |
|---|---|---|
| $R^5$ | $-H$ | $-CH_3$ |
| Y | 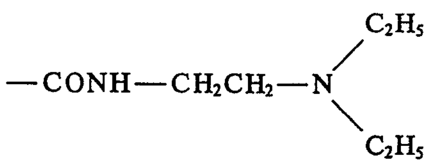 | 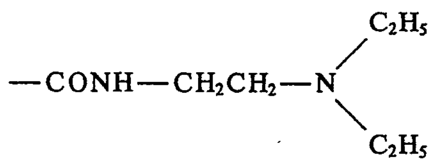 |

| | | |
|---|---|---|
| $R^5$ | $-H$ | $-H$ |
| Y | 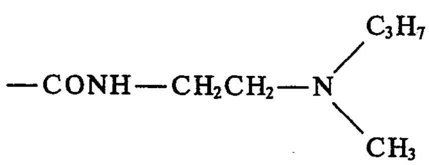 | 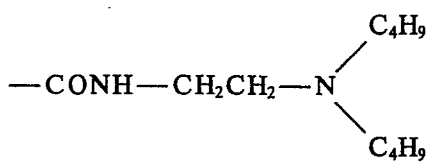 |

| | | |
|---|---|---|
| $R^5$ | $-H$ | $-H$ |
| Y | 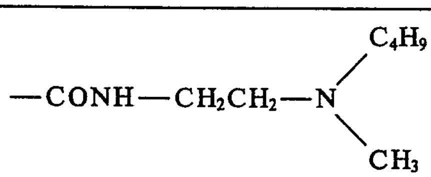 | 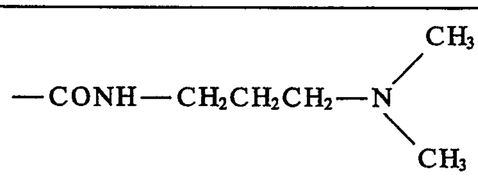 |

| | | |
|---|---|---|
| $R^5$ | $-CH_3$ | $-H$ |
| Y | 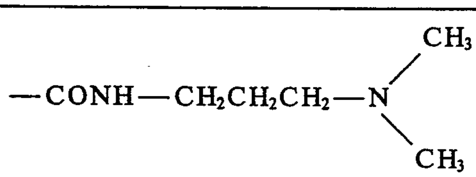 | 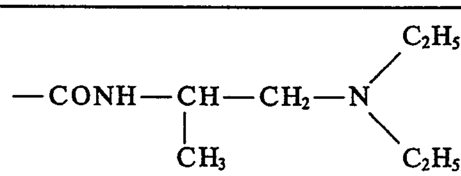 |

| | | | |
|---|---|---|---|
| $R^5$ | $-CH_3$ | $-H$ | $-H$ |
| Y | 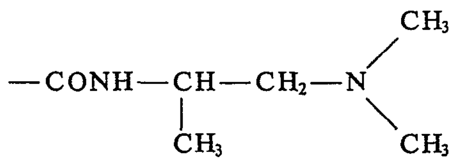 | 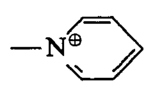 | 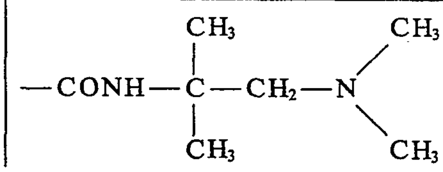 |

| | | | |
|---|---|---|---|
| $R^5$ | $-CH_3$ | $-CH_3$ | $-H$ |
| Y | 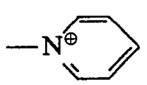 | 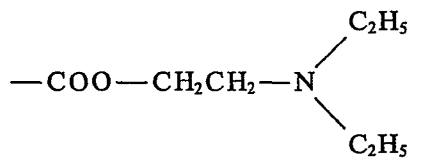 | 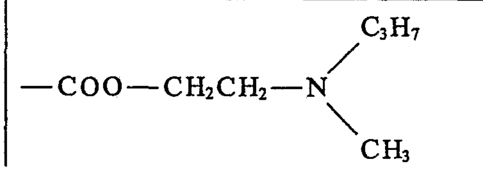 |

[1] Da N-Vinylamide unter sauren Bedingungen nicht beständig sind, müssen Ansätze, die saure Substanzen enthalten, vor der Polymerisation neutralisiert werden, beispielsweise mit den oben angegebenen anorganischen oder organischen Basen oder basischen Comonomeren.

Die als Komponente B) erfindungsgemäßer Zusammensetzungen einsetzbaren Homo- oder Copolymere werden hergestellt durch Polymerisation bzw. Copolymerisation von 50 bis 100 Gew.-%, vorzugsweise 60 bis 95 Gew.-%, eines Monomers der Formel VIa

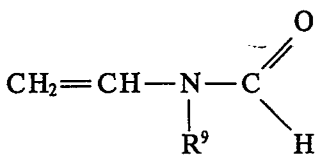

(VIa)

worin $R^9$ die oben angegebene Bedeutung hat und 0 bis 50 Gew.-%, vorzugsweise 5 bis 40 Gew.-%, eines Comonomeres der Formel VIIa

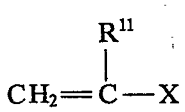

(VIIa)

worin $R^{11}$ und X die oben angegebenen Bedeutungen haben.

Gängige Monomere der Formel VIa, die zur Herstellung der Komponente B) erfindungsgemäßer Zusammensetzungen durch Homopolymerisation oder Copolymerisation mit Monomeren der Formel VIIa geeignet sind, sind beispielsweise N-Vinyl-formamid, N-Vinyl-N-methyl-formamid und N-Vinyl-N-hydroxymethyl-formamid. Gängige Monomere der Formel VIIa sind beispielsweise Acrylamid und Monomere, die oben unter Formel IIIa definiert worden sind.

Die Vernetzung der Komponente A) erfindungsgemäßer Zusammensetzungen kann auch herbeigefügt werden durch Verbindungen der Formel I.

Beispiele für Verbindungen der Formel I sind der folgenden Tabelle zu entnehmen:

| $R^1$ | $R^2$ | n | m |
|---|---|---|---|
| H | H | 1 | 0 |
| H | H | 1 | 1 |
| $CH_3$ | $CH_3$ | 1 | 0 |
| $CH_3$ | $CH_3$ | 1 | 1 |
| $C_2H_5$ | $C_2H_5$ | 1 | 0 |
| $C_2H_5$ | $C_2H_5$ | 1 | 1 |

Fortsetzung

| $R^1$ | $R^2$ | n | m |
|---|---|---|---|
| $C_3H_7$ | $C_3H_7$ | 1 | 0 |
| $C_4H_9$ | $C_4H_9$ | 1 | 0 |
| $C_4H_9$ | $CH_3$ | 1 | 0 |
| $C_3H_7$ | $C_2H_5$ | 1 | 0 |
| H | H | 2 | 0 |
| $CH_3$ | $CH_3$ | 2 | 0 |
| H | H | 2 | 1 |
| $CH_3$ | $CH_3$ | 2 | 1 |
| $C_2H_5$ | $C_2H_5$ | 2 | 0 |
| $C_3H_7$ | $C_3H_7$ | 2 | 0 |
| H | H | 3 | 0 |
| $CH_3$ | $CH_3$ | 3 | 0 |
| H | H | 3 | 1 |
| $C_2H_5$ | $C_2H_5$ | 3 | 0 |
| $C_3H_7$ | $C_3H_7$ | 3 | 0 |

Bevorzugte Verbindungen der Formel I sind:

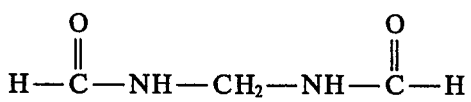

(Methylen-bis-formamid) und

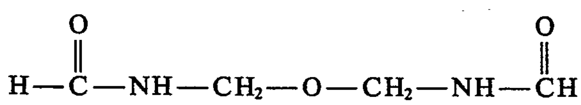

(Bis-(N-formyl-aminoethyl)ether).

Die Verbindungen der Formel I können auf einfache Weise nach den Angaben der Britischen Patentschrift 1 410 722 hergestellt werden.

Sollen Copolymere hergestellt werden, die mehrere verschiedene Reste Y bzw. X in den Komponenten A) und B) aufweisen, so werden zur Copolymerisation mehrere verschiedene, in der Regel 3, oder vorzugsweise 2, verschiedene Comonomere der Formeln IIIa bzw. VIIa eingesetzt.

Die Polymerisation bzw. Copolymerisation zur Herstellung der Komponenten A) oder B) kann nach allen bekannten Polymerisationsverfahren durchgeführt werden. Wenn eines der eingesetzten Comonomere ein Vinyl-Formamid-Derivat ist, so ist es zweckmäßig, bei einem pH-Wert von 6 bis 12, vorzugsweise 7 bis 9, zu arbeiten.

Zur Einstellung des pH-Wertes werden zweckmäßigerweise alkalischreagierende Salze von Alkalimetallen, z. B. Alkalikarbonate, Alkalihydrogenkarbonate, Alkaliborate, Di- oder Tri-Alkaliphosphate, Alkalihydroxide, Ammoniak oder organische Amine der Formel $NR_3^{16}$ eingesetzt, worin $R^{16}$ Wasserstoff, Alkyl mit 1 bis 4 Kohlenstoffatomen oder Hydroxyethyl ist und wobei mindestens einer der Reste $R^{16}$ verschieden ist von Wasserstoff. Bevorzugte Basen zur Einstellung des pH-Wertes sind die oben genannten Alkali-Verbindungen, insbesondere Natriumhydroxid, Kaliumhydroxid, Natriumkarbonat,

Natriumhydrogenkarbonat, Kaliumkarbonat und Kaliumhydrogenkarbonat und Natrium oder Kaliumborate. Eine weitere bevorzugte Base ist $NH_3$.

Die Polymerisationsreaktion kann initiiert werden durch energiereiche elektromagnetische oder korpuskulare Strahlung oder durch Substanzen, die Radikale bilden. Dementsprechend sind als Polymerisationsinitiatoren geeignet organische Per-Verbindungen, wie z. B. Benzoylperoxid, Alkylhydroperoxid, wie z. B. Butylhydroperoxid, Cumolhydroperoxid, p-Menthahydroperoxid, Dialkylperoxide, wie z. B. Di-, Tert.-Butylperoxid oder anorganische Per-Verbindungen, wie z. B. Kalium- oder Ammoniumpersulfat und Wasserstoffperoxid, ferner Azoverbindungen, wie z. B. Azo-bis-isobutyronitril, 2,2'-Azo-bis-(2-amidinopropan)-hydrochlorid oder Azo-bis-isobutyramid. Es ist vorteilhaft, die organischen oder anorganischen Per-Verbindungen in Kombination mit reduzierenden Substanzen einzusetzen. Beispiele für geeignete reduzierende Substanzen sind Natriumpyrosulfit, Natrium-hydrogensulfit oder Kondensationsprodukte von Formaldehyd mit Sulfoxylaten. Besonders vorteilhaft läßt sich die Polymerisation unter Einsatz von Mannich-Addukten von Sulfinsäuren, Aldehyden und Amino-Verbindungen ausführen, wie sie beispielsweise im deutschen Patent 1 301 566 beschrieben worden sind.

Es ist weiterhin bekannt, den Polymerisationsansätzen kleine Mengen von sogenannten Moderatoren zuzusetzen, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid oder Hydrohalogenide von Monoalkylaminen, Dialkylaminen oder Trialkylaminen, wie z. B. Dibutylaminhydrochlorid. Auch bei der Herstellung der als Komponente A) bzw. B) erfindungsgemäßer Zusammensetzungen einsetzbaren Copolymerisate können solche Moderatoren mit Vorteil verwendet werden.

Weiterhin können den Polymerisationsansätzen sogenannte Regulatoren zugesetzt werden; das sind solche Verbindungen, die das Molekulargewicht der hergestellten Polymerisate beeinflussen. Brauchbare bekannte Regulatoren sind z. B. Alkohole, wie Methanol, Ethanol, Propanol, Isopropanol, n-Butanol, sec.-Butanol und Amylalkohole, Alkylmercaptane, wie z. B. Dodecylmercaptan und tert.-Dodecylmercaptan, Isooctylthioglycolat und einige Halogenverbindungen, wie z. B. Tetrachlorkohlenstoff, Chloroform und Methylenchlorid.

Üblicherweise wird die Polymerisation in einer Schutzgasatmosphäre ausgeführt, vorzugsweise unter Stickstoff.

Die Reaktion kann in Lösung, in Emulsion, oder unter den Bedingungen der Fällungspolymerisation bei Temperaturen von 20 bis 120°C, vorzugsweise von 40 bis 100°C, ausgeführt werden.

Wenn Wasser als Lösungsmittel für die Polymerisationsreaktion eingesetzt wird, so verläuft sie in Lösung, und eine wäßrige viskose Lösung des Polymerisats bzw. Copolymerisats wird erhalten. Das Reaktionsprodukt kann isoliert werden, entweder durch Abdestillieren des Wassers aus der Lösung, oder durch Vermischen der wäßrigen Lösung mit organischen Lösungsmitteln, die mit Wasser vollständig mischbar sind, in denen aber das Copolymerisat unlöslich ist. Bei der Zugabe solcher organischen Lösungsmittel zu der wäßrigen Polymerlösung fällt das entstandene Polymerisat bzw. Copolymerisat aus und kann von der flüssigen Phase, z. B. durch Filtration abgetrennt werden. Vorzugsweise wird jedoch die erhaltene wäßrige Lösung des Polymerisats bzw. Copolymerisats direkt für den weiteren Gebrauch eingesetzt, gegebenenfalls nach Einstellung auf eine bestimmte gewünschte Konzentration.

Wenn die Copolymerisation in einem organischen Lösungsmittel wie z. B in einem niederen Alkanol, z. B. in tert.-Butanol, durchgeführt wird, so verläuft sie unter den Bedingungen der Fällungspolymerisation. In diesem Fall fällt das entstandene Polymerisat bzw. Copolymerisat im Verlauf der Reaktion in fester Form aus und kann leicht in üblicher Weise, wie z. B. durch Absaugen und anschließendes Trocknen, isoliert werden. Selbstverständlich ist es auch möglich und in manchen Fällen bevorzugt, das Lösungsmittel aus dem Reaktionsansatz heraus zu destillieren.

Die folgenden Ausführungsbeispiele zeigen den Einsatz erfindungsgemäßer Polymer-Zusammensetzungen zur Herstellung erfindungsgemäßer verdickter Säuren, bzw. von Säuregelen sowie die Herstellung der eingesetzten erfindungsgemäßen Polymer-Zusammensetzungen. Weitere illustrative Ausführungsbeispiele zur Herstellung der als Komponente B) eingesetzten Polymeren oder Copolymeren können unserer Parallel-Anmeldung mit dem Titel »Wasserlösliche selbstvernetzbare Copolymerisate« entnommen werden (EP-A 0 078 805).

Die in den folgenden Ausführungsbeispielen und Tabellen enthaltenen Abkürzungen haben die folgenden Bedeutungen:

AM: Acrylamid
VMA: N-Vinyl-N-methylacetamid
AMPS: 2-Acrylamido-2-methylpropan-sulfonsäure worin der Exponent
1 das Ammoniumsalz,
2 das Salz mit Dimethyl-$\beta$-hydroxylethylamin bedeutet,
AS: Acrylsäure
MAS: Methacrylsäure
NMA: N-Methylol-acrylamid
VSSNa: Na-Salz der Vinylsulfonsäure

NMVA: N-Methylol-vinylacetamid
VA: Vinylacetamid
VF: Vinylformamid
NMVF: N-Methylol-vinylformamid
VPA: Vinylphosphonsäure
A: Ammoniumperoxidsulfat
B: Eine Kombination von Ammoniumperoxidisulfate + Dibutylammonium-hydrochlorid

\+ 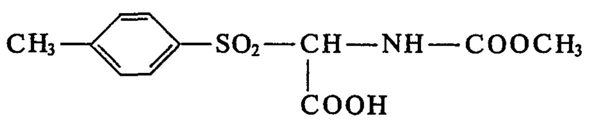

C: Azo-isobutyronitril
VIP: Vinylpyrrolidon.

Beispiel 1

a) Zu 100 g einer 1%igen wäßrigen Lösung eines Copolymerisats aus 80 Gew.-% Acrylamid, 15 Gew.-% AMPS und 5 Gew.-% Vinylpyrrolidon (K=201) werden 5 g N-Methylen-bis-formamid zugesetzt.
Die so erhaltene klare, leicht viskose Lösung läßt sich unverändert unbegrenzte Zeit lagern. Versetzt man diese Lösung mit 100 ml konz. Salzsäure, so steigt die Viskosität schnell an, und innerhalb von 30 Min. bildet sich ein formstabiles Gel. Bei normalen Temperaturen von 20 bis 25°C ist dieses Säuregel praktisch unverändert über einen Zeitraum von mindestens 15 Tagen haltbar. Bei 80 bis 90°C jedoch geht das Gel innerhalb von 20 Min. in eine leicht gelblich-braune Flüssigkeit von niederer Viskosität über.
Das in diesem Beispiel eingesetzte Copolymerisat kann wie folgt hergestellt werden:

b) In einem 2 l Polymerisationsgefäß, ausgerüstet mit Rührer, Thermometer, Gaseinlaß, Tropftrichter und Heizbad werden 600 ml entionisiertes Wasser vorgelegt und danach unter Rühren und Durchleiten eines leichten Stickstoffstromes folgende Monomeren zugefügt:

80 g Acrylamid
15 g AMPS und
5 g Vinylpyrrolidon

Sodann werden 0,5 g Azo-di-isobutyronitril zugefügt und die Reaktionsmischung mittels des Heizbades auf eine Temperatur von 50°C erwärmt. Bei dieser Temperatur wird 1 ml einer 10%igen Lösung von Benzoylperoxid in Aceton zugefügt, um die Polymerisationsreaktion zu starten. Im Verlauf der nun einsetzenden Polymerisation ist eine deutliche Zunahme der Viskosität festzustellen, und die Temperatur steigt bis auf 58°C an.
Nach Abklingen der Reaktion wird die Mischung noch eine weitere Stunde bei 80°C gerührt. Die hochviskose Polymermasse wird zum Schluß unter Rühren mit Wasser auf einen Gehalt von 1 Gew.-% verdünnt.

c) Gele von ähnlichen Eigenschaften erhält man, wenn das oben verwendete Copolymerisat ersetzt wird durch ein Copolymerisat aus 55 Gew.-% Acrylamid, 40 Gew.-% AMPS und 5 Gew.-% Vinylmethylacetamid (K = 165) oder durch ein Copolymerisat aus 60 Gew.-% Acrylamid, 35 Gew.-% AMPS und 5 Gew.-% Vinylmethyl-actamid (K = 179).

Beispiel 2

Einer 3,5gew.-%igen wäßrigen Lösung eines Copolymers aus 70 Gew.-% Acrylamid, 10 Gew.-% AMPS, 15 Gew.-% Vinylformamid und 5 Gew.-% Vinylpyrrolidon (K-Wert = 152) wird 1 Gew.-% N-Methylen-bis-formamid zugefügt. Die erhaltene klare Lösung kann unverändert über einen unbegrenzten Zeitraum gelagert werden. Setzt man dieser Lösung das gleiche Volumen konz. Salzsäure zu, so erhält man innerhalb von 20 Min. ein Säuregel, dessen Eigenschaften bei 20 bis 25°C über einen Zeitraum von mindestens 10 Tagen praktisch unverändert bleiben.

Bei 80 bis 90°C dagegen »schmilzt« dieses Gel innerhalb von 20 Min. unter Bildung einer klaren niederviskosen Flüssigkeit.

Säuregele von ähnlichem Verhalten können erhalten werden, wenn das in diesem Beispiel benutzte Copolymerisat durch die Copolymerisate der folgenden Tabelle ersetzt wird.

| AM | AMPS | | η/rel. | K-Wert |
|---|---|---|---|---|
| 60 | 20 | 20 VIP | | |
| 55 | 20 | 25 VIP | | |
| 60 | 20 | 20 VIP | 39,46 | 215 |
| 60 | 20 | 20 VIP | 30,3 | 206 |
| 70 | 10 | 20 VIP | 32,6 | 208 |

Alle Mengenangaben in dieser Tabelle sind Gewichtsteile.

Beispiel 3

100 ml einer 1gew.-%igen wäßrigen Lösung eines Copolymers aus 65 Gew.-% Acrylamid und 35 Gew.-% Natriumacrylat (K = 203) werden 11 ml konz. Salzsäure gemischt. Die so erhaltene stark saure Mischung stellt eine schwach viskose Flüssigkeit dar, die für lange Zeit unverändert aufbewahrt werden kann. Durch Zusatz von 0,5 Gew.-% Methylen-bis-formamid zu der stark sauren Lösung geht diese im Verlauf von 10 Minuten in ein formstabiles Gel über. Bei 20 bis 25 °C hält sich dieses Säuregel unverändert für mindestens 12 Tage, während es bei 80 bis 90°C innerhalb von 30 Minuten in eine klare niederviskose Flüssigkeit übergeht.

Ein ähnliches Säuregel kann erhalten werden, wenn das Methylen-bis-formamid durch die gleiche Menge einer Verbindung der Formel

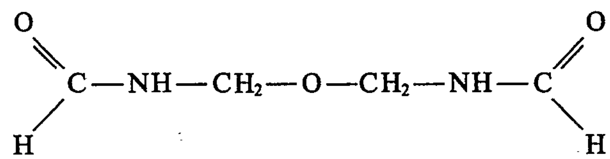

ersetzt wird.

Die in diesem Beispiel verwendete wäßrige Polymerlösung kann hergestellt werden, indem man unter kräftigem Rühren in 97,5 ml Wasser 2,6 ml einer Copolymer-Emulsion eintropft, die wie unten beschrieben erhalten werden kann.

Die Copolymeren-Emulsion wird wie folgt hergestellt:

1,85 g Sorbitan-Monostearat werden in 30 g eines technischen Gemisches isomerer Kohlenwasserstoffe mit einem Siede-Bereich von 200 bis 240°C gelöst. Diese Lösung wird in ein 2-l-Reaktionsgefäß, ausgerüstet mit Rührer, Thermometer und Gaseinlaß für Stickstoff, eingefüllt.

Nun wird eine Monomeren-Lösung hergestellt durch Auflösung von 33,9 g Acrylamid und 18,2 g Acrylsäure in 50 ml entionisiertem Wasser und Einstellen des pH-Wertes auf 8,5 durch Zusatz einer 20gew.-%igen wäßrigen Lösung von Natriumhydroxid. Dann wird die so erhaltene wäßrige Monomeren-Lösung unter starkem Rühren langsam in die vorgelegte Sorbitan-Monostearat-Lösung eingetropft und anschließend die Luft in dem Reaktionsgefäß durch Stickstoff verdrängt. Zu der dann vorliegenden Monomeren-Emulsion werden 0,07 g 2,2'-Azo-bis-isobutyronitril, gelöst in Aceton, zugesetzt und die Reaktionsmischung unter Rühren langsam auf 60°C angewärmt. Nach 2,5 Stunden ist die Polymerisationsreaktion beendet, und man erhält eine stabile 39gew.-%ige Emulsion des Copolymerisats mit einem K-Wert von 203.

Beispiel 4

Eine 1 gew.-%ige wäßrige Lösung eines Copolymers von 90 Gew.-% Acrylamid und 10 Gew.-% Dimethylaminoethyl-methacrylat, die 5 Gew.-% N-Methylen-bis-formamid enthält, wird in einem Volumenverhältnis von 1 : 1 mit konzentrierter Salzsäure gemischt. Innerhalb von 10 Min. entsteht ein formstabiles Säuregel, das bei 20 bis 30°C mindestens acht Tage lang unverändert haltbar ist, bei 80 bis 90°C jedoch in kurzer Zeit in eine klare niederviskose Flüssigkeit übergeht. Ersatz des oben eingesetzten N-Methylen-bis-formamids durch die gleiche Menge einer Verbindung der Formel

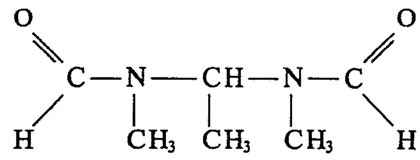

führt zu dem gleichen Resultat.

Die oben eingesetzte wäßrige Polymeren-Lösung kann erhalten werden, indem man 95,2 ml Wasser und 4,8 g einer Copolymeren-Emulsion, deren Herstellung unten beschrieben ist, unter kräftigem Rühren miteinander mischt und anschließend 5 g N-Methylen-bis-formamid zusetzt.

Die Copolymer-Emulsion wird wie folgt hergestellt:

185,0 g einer Mischung aus 84% gesättigten aliphatischen Kohlenwasserstoffen und 16% Naphthenkohlenwasserstoffen (Siedebereich der Mischung 192 bis 254°C), 188,3 g eines technischen Chloralkans mit einem Chlorgehalt von 66,5 Gew.-% und einer Dichte von 1,575 g/cm$^3$ und 32 g Sorbitmonooleat werden in einem Reaktionsgefäß, ausgerüstet mit Rührer, Thermometer und Stickstoff-Ein- und Auslaß, miteinander gemischt. Nach guter Durchmischung der Bestandteile wird eine Lösung von 180 g Acrylamid und 20 g Dimethylaminoethylmethacrylatacetat in 387,5 g Wasser unter kräftigem Rühren zugefügt, wobei die wäßrige Phase in der organischen Phase emulgiert wird. Durch die Mischung wird nun 30 Minuten lang Stickstoff geleitet und dann die Temperatur innerhalb von 15 Minuten auf 60°C gesteigert. Bei dieser Temperatur wird der Mischung eine Lösung von 0,212 g 2,2'-Azo-bis-isobutyronitril in einer geringen Menge Aceton zugefügt. Nach dreistündigem Rühren der Mischung bei 60°C ist die Polymerisationsreaktion abgeschlossen. Man erhält eine Emulsion, die nicht klumpt und nicht zum Absetzen neigt. Sie hat eine Viskosität von 710 m Pa sec. bei einem Schergefälle von 29,2 sec.$^{-1}$ und enthält 20,8 Gew.-% eines Polymers mit einem K-Wert von 201.

Beispiel 5

a) 1,85 g Sorbitan-monostearat werden in 28 g eines technischen Gemisches isomerer Kohlenwasserstoffe mit einem Siedebereich von 200 bis 240°C (Isopar M®, Verkaufsprodukt der Exxon Corporation) gelöst. Die Lösung wird in einem 2-l-Reaktionsgefäß, versehen mit Rührer, Thermometer und Gaseinlaß für Stickstoff, eingefüllt. Dann stellt man eine Monomerenlösung her durch Auflösen von 33,9 g Acrylamid und 2,4 g Acrylsäure in 40 ml entionisiertem Wasser und Einstellen des pH-Wertes auf 8,5 durch Zusatz von 20% wäßriger Natriumhydroxidlösung. Die wäßrige Monomerenlösung wird nun langsam unter kräftigem Rühren in die organische Sorbitan-monostearat-Lösung eingetropft und die Luft in dem Reaktionsgefäß durch Stickstoff ersetzt. Der erhaltenen Emulsion wird eine Lösung von 0,07 g 2,2-Azo-bis-iso-butyronitril im Aceton zugesetzt und dann das Reaktionsgemisch allmählich unter Rühren auf 60°C erwärmt. Bei dieser Temperatur ist die Polymerisationsreaktion innerhalb von 2,5 Stunden beendet, und man erhält eine stabile Emulsion des Copolymerisats.

b) In einem 1-l-Polymerisationsgefäß werden 67 g Isopar M® vorgelegt und auf eine Temperatur von 60°C angewärmt. Unter Rühren werden dann nacheinander 0,27 Sorbitan-monolaurat, 1,3 g Sorbitan-monostearat, 0,17 Sorbitan-monolaurat, und 4,3 g Polyoxiethylen-sorbitan-monostearat zugesetzt und aufgelöst. Unter weiterem schwachem Rühren wird nun ein Stickstoffstrom in die Lösung eingeleitet und deren Temperatur auf 60°C eingestellt. Inzwischen bereitet man eine wäßrige Monomerenlösung auf folgende Weise:
In 94 ml Wasser werden in einem getrennten Gefäß 2,4 g AMPS, 10 g VIMA, 10,0 g Vinylpyrrolidon und 10,6 g N-Vinyl-formamid unter Rühren gelöst. Diese Lösung wird durch tropfenweisen Zusatz von 10gew.-%iger wäßriger Natriumhydroxidlösung auf einem pH-Wert von 8 bis 10 eingestellt. Anschließend werden noch 0,1 g Ammoniumpersulfat zugesetzt. Diese wäßrige Monomerenlösung wird unter schnellem Rühren in die in dem Polymerisationsgefäß vorgelegte organische Phase eingetropft, wodurch die wäßrige Lösung in der organischen Phase emulgiert wird. Die Polymerisationsreaktion setzt nach etwa 30 Min. ein und äußert sich durch einen Anstieg der Temperatur. Im Verlauf von 15 Min. steigt die Temperatur auf 80 bis 90°C. Nach Abklingen der Polymerisationsreaktion wird das Gemisch noch weitere zwei Stunden auf 80°C geheizt. Man erhält so eine stabile Emulsion mit einem Polymerengehalt von 30 Gew.-%.

Die zwei Emulsionen, die in den Abschnitten a) und b) dieses Beispiels hergestellt wurden, werden gemischt und 5 Minuten lang kräftig gerührt. Die so erhaltene Copolymerzusammensetzung hat einen Copolymerengehalt von etwa 27% und stellt ein hochaktives wertvolles Verdickungsmittel für wäßrige Säuren dar.

Beispiel 6

a) 185,0 Gew.-Teile einer Mischung, enthaltend 84 Gew.-% gesättigte aliphatische Kohlenwasserstoffe und 16 Gew.-% Naphten-Kohlenwasserstoffe (Siedebereich der Mischung 192 bis 254°C), 188,3 Gew.-Teile eines technischen Chloralkans mit einem Chlorgehalt von 66,5% und einer Dichte von 1,575 g/cm$^3$ und 32 Gew.-Teile Sorbitan-monooleat werden in einem Reaktionsgefäß, versehen mit Rührer, Thermometer und Stickstoff-Ein- und Auslaßöffnungen miteinander gemischt.
Nach guter Durchmischung der Bestandteile wird eine separat hergestellte Lösung von 212,5 Gew.-Teilen Acrylamid in 387,5 Gew.-Teilen Wasser unter starkem Rühren in der vorgelegten organischen Phase emulgiert. Man läßt 30 Minuten lang Stickstoff durch die Mischung streichen und erwärmt diese dann innerhalb von 15 Minuten auf eine Temperatur von 60°C. Nach Zusatz einer Lösung von 0,212 Gew.-Teilen 2,2'-Azo-bis-isobutyronitril in einer kleinen Menge Aceton wird die Emulsion drei Stunden lang auf 60°C erwärmt. Danach ist die Polymerisationsreaktion abgeschlossen. Man erhält eine nicht klumpende Polymerdispersion, welche keine Neigung zum Absetzen zeigt und bei einem Schergefälle von 29,3 sec.$^{-1}$ eine Viskosität von 710 m Pa sec. aufweist. Das Polymerisat hat einen K-Wert von 201.

b) 150 Gew.-Teile einer deodorierten Kerosinfraktion vom Siedebereich 190 bis 240°C (Exsol D® der Esso Chemie, Deutschland) werden in einem 1-l-Polymerisationskolben vorgelegt und auf 60°C erwärmt. Unter schwachem Rühren werden 1,3 Gew.-Teile Sorbitan-monolaurat, 6,5 Gew.-Teile Sorbitan-monostearat, 0,8 Gew.-Teile Sorbitan-monooleat und 22 Gew.-Teile Polyoxyethylen-sorbitan-monostearat nacheinander zugefügt und gelöst. Unter weiterem schwachem Rühren wird ein Stickstoffstrom in die Lösung eingeleitet und die Temperatur auf 60°C eingestellt. In einem separaten Gefäß werden in 150 Gew.-Teilen Wasser 30 Gew.-Teile AMPS, 45 Gew.-Teile Vinylpyrrolidon und 55 Gew.-Teile N-Vinylformamid gelöst. Diese Lösung wird durch tropfenweisen Zusatz von 10gew-%iger wäßriger Natriumhydroxidlösung auf einen pH-Wert von 8 bis 10 eingestellt. Danach werden 0,3 g Ammoniumpersulfat zugefügt. Die so erhaltene wäßrige Monomerenlösung wird dann unter starkem Rühren in die vorgelegte organische Phase eingetropft und emulgiert. Nach etwa 30 Min. setzt die Polymerisation ein, und die Temperatur steigt spontan innerhalb von 15 Min. auf 80 bis 90°C. Nach Abklingen der Polymerisationsreaktion wird die Mischung für weitere zwei Stunden auf 80°C erwärmt. Man erhält eine stabile Polymer-Emulsion mit einem Polymeren-Gehalt von 30 Gew.-%; das Molekulargewicht des Polymeren beträgt 95 000.

c) Die zwei Emulsionen, die in den Abschnitten a) und b) dieses Beispiels hergestellt wurden, werden unter kräftigem Rühren 5 Min. lang gemischt. Die so erhaltene erfindungsgemäße Copolymer-Zusammensetzung hat einen Copolymeren-Gehalt von etwa 27% und stellt ein hochaktives wertvolles Verdickungsmittel für wäßrige Säuren dar.

Beispiel 7

Für die Drucksäuerung wird eine Erdgasbohrung in West Texas ausgewählt. Die Bohrung hat ein Produktionsintervall zwischen einer Tiefe von 2940 bis 2970 Meter. Die Sohlen-Temperatur in diesem Intervall beträgt 76 bis 77°C. Die Drucklässigkeit der Formation beträgt durchschnittlich 0,1 md (millidarcy). Die spontane Produktivität der Bohrung beträgt vor der Behandlung ca. 112 m$^3$ Gas und ca. 790 l Kondensat pro Tag.

Das einzusetzende Drucksäurerungsfluid wird hergestellt, indem man 151 400 Liter 15%ige Salzsäure, die 302 l (0,2 Gew.-%) eines handelsüblichen Korrosionsinhibitors enthält, mit 726 kg eines fein gepulverten (100—200 mesh) Copolymers aus 55 Gew.-% Acrylamid, 40 Gew.-% AMPS und 5 Gew.-% N-Methyl-N-vinyl-acetamid (K = 165) versetzt. Zusätzlich werden der Mischung 3002 l (0,2 Gew.-%) eines nichtionischen fluorhaltigen Netzmittels zugesetzt. Die Mischung wird eine Stunde in zwei Tanks gelagert und stellt dann eine homogene Flüssigkeit mit einer Viskosität von etwa 35 cps dar, gemessen bei einem Scher-Gefälle von 511 sec.$^{-1}$ in einem Fann-35 Viskosimeter. Dieses Behandlungsfluid wird in die oben bezeichnete Tiefbohrung eingepumpt, wobei gleichzeitig pro 250 l der Behandlungsflüssigkeit 1 l einer wäßrigen Vernetzerlösung in das einströmende Behandlungsfluid eindosiert werden, die 50 Gew.-% eines atktiven Polymeren aus 80 Gew.-% N-Vinyl-formamid, 10 Gew.-% Acrylsäure und 10 Gew.-% N-Vinyl-pyrrolidon enthält. Die Injektionsgeschwindigkeit des Behandlungsfluids beträgt etwa 1900 l pro Minute bei einem an der Oberfläche gemessenen Behandlungsdruck von 414 bar. Nach etwa 80 bis 85 Minuten ist die gesamte Behandlungsflüssigkeit in das Bohrloch eingepreßt, und dieses wird für 6 Stunden verschlossen, um der Säure Gelegenheit zu geben, mit dem Gestein zu reagieren. Nach dieser Zeit wird der Druck am Kopf der Bohrung entlastet und die Förderung wiederhergestellt. Eine Messung der Förderrate ergibt eine wesentliche Zunahme der Produktivität der Bohrung.

**Patentansprüche für die Vertragsstaaten: BE, CH, DE, FR, LI, NL**

1. Vernetzbare, wasserlösliche Polymer-Zusammensetzung enthaltend eine polymere Verbindung, die im Molekül mindestens 10%, bezogen auf das Gewicht des Polymerisats, Carbonamidgruppen aufweist und eine Verbindung, die im Molekül mindestens zwei Formylamidogruppen aufweist, im Gewichtsverhältnis von 1 :0,2 bis 1 :20, wobei die Carbonamidgruppen und die Formylamidogruppen in wäßrigem Medium in Gegenwart von Säure miteinander reagieren unter Ausbildung die Vernetzung bewirkender Brückenglieder der Formel $-NR^x-CH=N-CO-$ worin $R^x$ Wasserstoff, Alkyl mit 1 bis 4 C-Atomen oder $-CH_2OH$ bedeutet, mit Ausnahme solcher vernetzbaren, wasserlöslichen Polymer-Zusammensetzungen, bei denen die Carbonamidgruppen aufweisende polymere Verbindung und die Formylamidogruppen aufweisende Verbindung identische, Carbonamidgruppen und Formylamidogruppen aufweisende Copolymerisate sind.

2. Vernetzbare, wasserlösliche Polymer-Zusammensetzung gemäß Anspruch 1 enthaltend

A) ein wasserlösliches Homo- oder Copolymerisat, das Carbonamidgruppen aufweist in einer Menge von mindestens 10% bezogen auf das Gewicht des Polymerisats und

B) a) eine Verbindung der Formel I

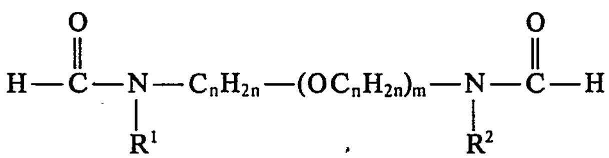

(I)

worin

$R^1$ und $R^2$ Wasserstoff, Alkyl mit 1 bis 4 Kohlenstoffatomen oder $-CH_2OH$
n eine Zahl von 1 bis 3 und
m eine der Zahlen 0 oder 1 bedeutet

und/oder

b) ein wasserlösliches Homo- oder Copolymerisat, das Formylamidogruppen der Formel

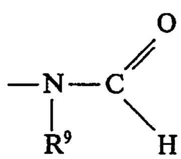

in einer Menge von mindestens 1 Mol pro 500 g des Polymerisats enthält, wobei $R^9$ Wasserstoff, Alkyl mit 1 bis 4 C-Atomen oder $-CH_2OH$ bedeutet.

3. Vernetzbare, wasserlösliche Polymer-Zusammensetzung gemäß Anspruch 2, deren Komponente A zu 50 bis 100 Gew.-% aus Einheiten der Formel II

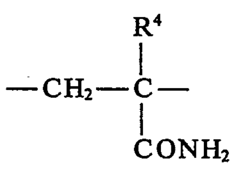

(II)

worin $R^4$ für Wasserstoff oder Methyl steht,
und 0 bis 50 Gew.-% Einheiten der Formel III

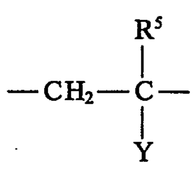

(III)

besteht, worin

$R^5$ für Wasserstoff oder Alkyl mit 1 bis 3 Kohlenstoffatomen, vorzugsweise für Wasserstoff und Methyl, steht und

Y Formylamido; N-substituiertes Formylamido, wobei der N-Substituent Methyl oder Hydroxymethyl ist; Cyan; Carboxyl oder dessen Alkali- oder Ammoniumsalz; Alkoxycarbonyl mit 1 bis 6, vorzugsweise 1 bis 3, Kohlenstoffatomen; Hydroxy-alkoxycarbonyl mit 1 bis 3 Kohlenstoffatomen; N-Methylolcarbonamid der Formel $HOCH_2NH-CO-$, dessen Methylolgruppe gegebenenfalls mit Alkanolen von 1 bis 4 Kohlenstoffatomen veräthert ist; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei die Sulfonsäure- und Phosphonsäuregruppen auch in Form ihrer Alkali- oder Ammoniumsalze vorliegen können;

ein Rest der Formel IV

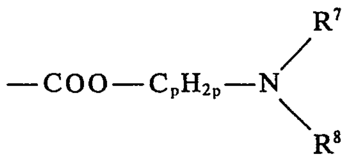

(IV)

ein Rest der Formel V

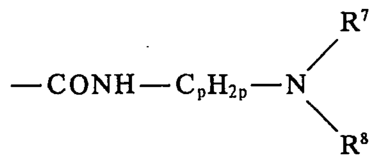

(V)

wobei die Reste der Formeln IV und V auch quaterniert sein können, z. B. durch Umsetzung mit $CH_3-Cl$ oder Dimethylsulfat, und wobei $R^7$ und $R^8$ gleich oder verschieden sind und für Alkyl mit 1 bis 4, vorzugsweise 1 oder 2, Kohlenstoffatomen stehen und worin p eine Zahl von 1 bis 4 bedeutet, ist.

4. Vernetzbare, wasserlösliche Polymer-Zusammensetzung gemäß Anspruch 2, deren Komponente B ein Copolymerisat ist, das zu 50—100 Gew.-% aus Einheiten der Formel VI

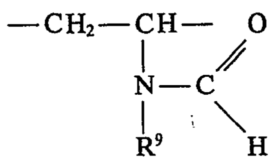

(VI)

worin $R^9$ für Wasserstoff, Methyl oder Hydroxymethyl steht und zu 0—50 Gew.-% aus Einheiten der Formel VII

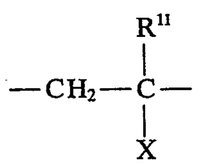

(VII)

worin

$R^{11}$ für Wasserstoff oder Methyl steht und

X Cyan; Carboxyl oder dessen Alkali- oder Ammoniumsalze; Alkoxycarbonyl mit 1 bis 6, vorzugsweise 1 bis 3, Kohlenstoffatomen; Hydroxy-alkoxycarbonyl mit 1 bis 3 Kohlenstoffatomen; Carbonamid; N-Methylolcarbonamid der Formel $HOCH_2NH-CO-$, dessen Methylolgruppe gegebenenfalls mit Alkanolen mit 1 bis 4 Kohlenstoffatomen veräthert sein kann; Alkanoylamino mit 1 bis 4 Kohlenstoffatomen, das durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylcarbonamid mit 1 bis 4 Kohlenstoffatomen; die Phosphonsäuregruppe, wobei Sulfon- und Phosphonsäuregruppen auch in Form ihrer Alkali- oder Ammoniumsalze vorliegen können;

einen Rest der Formel VIII

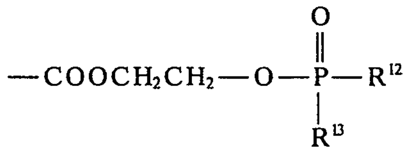

(VIII)

worin $R^{12}$ und $R^{13}$ gleich oder verschieden sind und für Alkyl mit 1 bis 4, vorzugsweise 1 oder 2, Kohlenstoffatomen stehen, einen Rest der Formel IX

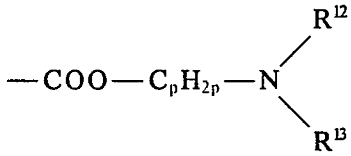

(IX)

worin $R^{12}$ und $R^{13}$ die oben angegebenen Bedeutungen haben und p für eine Zahl von 1 bis 4 steht, oder einen Rest der Formel (X)

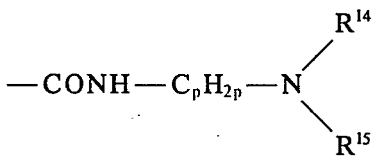

(X)

worin $R^{14}$ und $R^{15}$ gleich oder verschieden sind und für Alkyl mit 1 bis 4, vorzugsweise 1 oder 2, Kohlenstoffatomen stehen, oder die quaternierten Reste der Formeln IX und (X) bedeutet, besteht.

5. Vernetzbare, wasserlösliche Polymer-Zusammensetzung gemäß den Ansprüchen 1 und 2, enthaltend ein wasserlösliches Homo- oder Copolymerisat, das Carbonamidgruppen aufweist in einer Menge von mindestens 10% bezogen auf das Gewicht des Polymerisats und eine bis-Formylamidoverbindung der Formel I

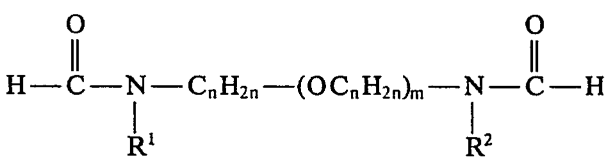

(I)

worin $R^1$ und $R^2$ Wasserstoff, Alkyl mit 1 bis 4 C-Atomen oder $-CH_2OH$ bedeuten.

6. Verfahren zur Herstellung einer vernetzten Polymer-Zusammensetzung, die vernetzende Brückenglieder der Formel $-NR^x-CH=N-CO-$ aufweist, dadurch gekennzeichnet, daß man eine Komponente A, die im Molekül mindestens 10%, bezogen auf das Gewicht des Polymerisats, Carbonamidgruppen aufweist und eine Komponente B, die im Molekül mindestens zwei Formylamidogruppen aufweist, in saurem, wäßrigem Medium miteinander reagieren läßt, wobei die Komponente B nicht ein Carbonamidgruppen und Formylamidogruppen aufweisendes, mit der Komponente A identisches Copolymerisat ist.

7. Verfahren gemäß Anspruch 6, dadurch gekennzeichnet, daß die Komponente A ein Homo- oder Copolymerisat ist, das Carbonamidgruppen enthält, in einer Menge von mindestens 10% bezogen auf das Gewicht des Polymerisats und die Komponente B eine bis-Formylamidoverbindung der Formel I

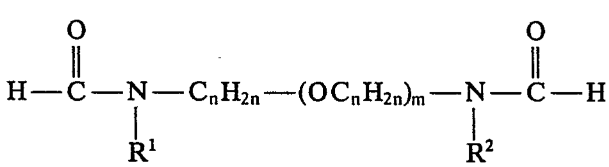

(I)

worin $R^1$ und $R^2$ Wasserstoff, Alkyl mit 1 bis 4 C-Atomen oder $-CH_2OH$ bedeuten.

8. Verfahren gemäß Anspruch 6, dadurch gekennzeichnet, daß die Komponente A ein Homo- oder Copolymerisat ist, das Carbonamidgruppen enthält und die Komponente B ein Homo- oder Copolymerisat ist, das Formylamidogruppen der Formel

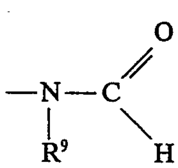

enthält, worin $R^9$ Wasserstoff, Alkyl mit 1 bis 4 C-Atomen oder $CH_2OH$ ist.

9. Vernetzte Polymer-Zusammensetzung, dadurch gekennzeichnet, daß die vernetzenden Brücken die Formel

$$-NR^x-CH=N-CO-$$

haben, worin $R^x$ Wasserstoff, Alkyl mit 1 bis 4 C-Atomen oder $-CH_2OH$ bedeutet und die durch die vernetzenden Brücken verbundenen Moleküle nicht identische Polymermoleküle sind.

10. Vernetzte Polymer-Zusammensetzungen, erhalten durch Reaktion von Carbonamidgruppen einer Komponente A mit Formylaminogruppen einer Komponente B in stark saurem wäßrigen Medium wobei die Komponente

A) ein wasserlösliches Homo- oder Copolymerisat ist, das Carbonamidgruppen aufweist in einer Menge von 10% bezogen auf das Gewicht des Polymerisats und Komponente

B) a) eine Verbindung der Formel I

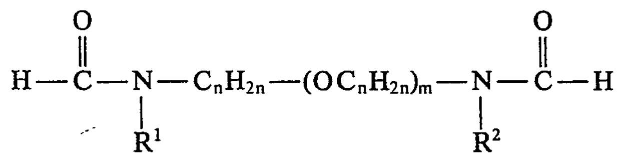

(I)

worin

$R^1$ und $R^2$ Wasserstoff, Alkyl mit 1 bis 4 Kohlenstoffatomen oder $-CH_2OH$,
n eine Zahl von 1 bis 3 und
m eine der Zahlen 0 oder 1 bedeutet,

und/oder

b) ein wasserlösliches Homo- oder Copolymerisat ist, das Formylamidogruppen der Formel

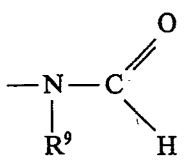

in einer Menge von mindestens 1 Mol pro 500 g des Polymerisats enthält, wobei $R^9$ Wasserstoff, Alkyl mit 1 bis 4 C-Atomen oder $-CH_2OH$ bedeutet, und wobei die Komponente Bb nicht ein Carbonamidgruppen und Formylamidogruppen aufweisendes, mit der Komponente A identisches Copolymerisat ist.

11. Verwendung der vernetzten Polymer-Zusammensetzungen der Ansprüche 9 oder 10 als Verdicker für wäßrige Säure.

12. Hochviskose wäßrige Säure-Zubereitung bestehend aus einer wäßrigen Lösung von 70 bis 99,8 Gew.-% einer Säure und 30 bis 0,2 Gew.-% einer vernetzten Copolymer-Zusammensetzung der Ansprüche 9 oder 10.

13. Verfahren zur Stimulierung von Erdöl- bzw. Erdgasbohrungen durch Drucksäuerung mit einer verdickten Säure, dadurch gekennzeichnet, daß eine verdickte Säure eingesetzt wird, die als Verdicker eine vernetzte Polymerzusammensetzung gemäß den Ansprüchen 9 oder 10 enthält.

**Patentansprüche für den Vertragsstaat: AT**

1. Vernetzbare, wasserlösliche Polymer-Zusammensetzung enthaltend eine polymere Verbindung, die im Molekül mindestens 10%, bezogen auf das Gewicht des Polymerisats, Carbonamidgruppen aufweist und eine Verbindung, die im Molekül mindestens zwei Formylamidogruppen aufweist, im Gewichtsverhältnis von 1 : 0,2 bis 1 : 20, wobei die Carbonamidgruppen und die Formylamidogruppen in wäßrigem Medium in Gegenwart von Säure miteinander reagieren unter Ausbildung die Vernetzung bewirkender Brückenglieder der Formel $-NR^x-CH=N-CO-$ worin $R^x$ Wasserstoff, Alkyl mit 1 bis 4 C-Atomen oder $-CH_2OH$ bedeutet, mit Ausnahme solcher vernetzbaren, wasserlöslichen Polymer-Zusammensetzungen, bei denen die Carbonamidgruppen aufweisende polymere Verbindung und die Formylamidogruppen aufweisende Verbindung identische, Carbonamidgruppen und Formylamidogruppen aufweisende Copolymerisate sind.

2. Vernetzbare, wasserlösliche Polymer-Zusammensetzung gemäß Anspruch 1 enthaltend

A) ein wasserlösliches Homo- oder Copolymerisat, das Carbonamidgruppen aufweist in einer Menge von mindestens 10% bezogen auf das Gewicht des Polymerisats und

B) a) eine Verbindung der Formel I

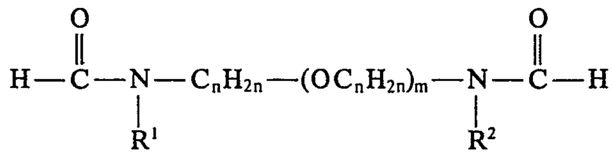

(I)

worin

$R^1$ und $R^2$ Wasserstoff, Alkyl mit 1 bis 4 Kohlenstoffatomen oder $-CH_2OH$
n eine Zahl von 1 bis 3 und
m eine der Zahlen 0 oder 1 bedeutet

und/oder

b) ein wasserlösliches Homo- oder Copolymerisat, das Formylamidogruppen der Formel

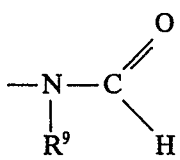

in einer Menge von mindestens 1 Mol pro 500 g des Polymerisats enthält, wobei $R^9$ Wasserstoff, Alkyl mit 1 bis 4 C-Atomen oder $-CH_2OH$ bedeutet.

3. Vernetzbare, wasserlösliche Polymer-Zusammensetzung gemäß Anspruch 2, deren Komponente A zu 50 bis 100 Gew.-% aus Einheiten der Formel II

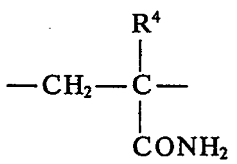

(II)

worin $R^4$ für Wasserstoff oder Methyl steht,
und 0 bis 50 Gew.-% Einheiten der Formel III

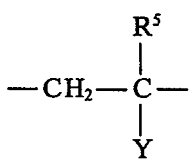

(III)

besteht, worin

$R^5$ für Wasserstoff oder Alkyl mit 1 bis 3 Kohlenstoffatomen, vorzugsweise für Wasserstoff und Methyl, steht und

Y Formylamido; N-substituiertes Formylamido, wobei der N-Substituent Methyl oder Hydroxymethyl ist; Cyan; Carboxyl oder dessen Alkali- oder Ammoniumsalz; Alkoxycarbonyl mit 1 bis 6, vorzugsweise 1 bis 3, Kohlenstoffatomen; Hydroxy-alkoxycarbonyl mit 1 bis 3 Kohlenstoffatomen; N-Methylolcarbonamid der Formel $HOCH_2NH-CO-$, dessen Methylolgruppe gegebenenfalls mit Alkanolen von 1 bis 4 Kohlenstoffatomen veräthert ist; Alkanoylamino mit 1 bis 4 Kohlenstoffatomen, das gegebenenfalls durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylamidocarbonyl mit 1 bis 4 Kohlenstoffatomen; die Phosphonsäuregruppe, wobei die Sulfonsäure- und Phosphonsäuregruppen auch in Form ihrer Alkali- oder Ammoniumsalze vorliegen können;

ein Rest der Formel IV

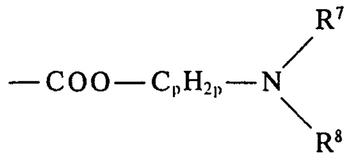

(IV)

ein Rest der Formel V

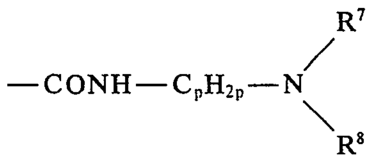

(V)

wobei die Reste der Formeln IV und V auch quaterniert sein können, z. B. durch Umsetzung mit $CH_3-Cl$ oder Dimethylsulfat, und wobei $R^7$ und $R^8$ gleich oder verschieden sind und für Alkyl mit 1 bis 4, vorzugsweise 1 oder 2, Kohlenstoffatomen stehen und worin p eine Zahl von 1 bis 4 bedeutet, ist.

4. Vernetzbare, wasserlösliche Polymer-Zusammensetzung gemäß Anspruch 2, deren Komponente B ein Copolymerisat ist, das zu 50—100 Gew.-% aus Einheiten der Formel VI

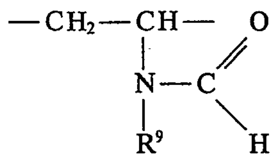

(VI)

worin $R^9$ für Wasserstoff, Methyl oder Hydroxymethyl steht und zu 0—50 Gew.-% aus Einheiten der Formel VII

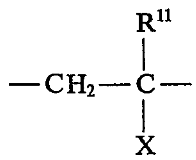

(VII)

worin

$R^{11}$ für Wasserstoff oder Methyl steht und

X Cyan; Carboxyl oder dessen Alkali- oder Ammoniumsalze; Alkoxycarbonyl mit 1 bis 6, vorzugsweise 1 bis 3, Kohlenstoffatomen; Hydroxy-alkoxycarbonyl mit 1 bis 3 Kohlenstoffatomen; Carbonamid; N-Methylolcarbonamid der Formel $HOCH_2NH-CO-$, dessen Methylolgruppe gegebenenfalls mit Alkanolen mit 1 bis 4 Kohlenstoffatomen veräthert sein kann; Alkanoylamino mit 1 bis 4 Kohlenstoffatomen, das durch Methylol oder Alkyl mit 1 bis 4 Kohlenstoffatomen N-substituiert sein kann; Pyrrolidonyl-(1); Phenyl; Pyridinium; die Sulfonsäuregruppe; Sulfoalkylcarbonamid mit 1 bis 4 Kohlenstoffatomen; die Phosphonsäuregruppe, wobei Sulfon- und Phosphonsäuregruppen auch in Form ihrer Alkali- oder Ammoniumsalze vorliegen können;

einen Rest der Formel VIII

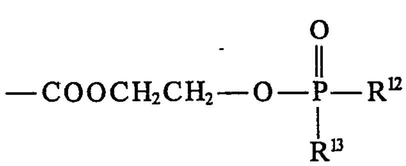

(VIII)

worin $R^{12}$ und $R^{13}$ gleich oder verschieden sind und für Alkyl mit 1 bis 4, vorzugsweise 1 oder 2, Kohlenstoffatomen stehen, einen Rest der Formel IX

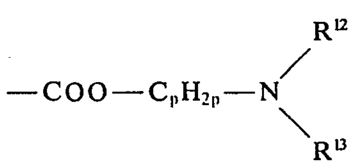

(IX)

worin $R^{12}$ und $R^{13}$ die oben angegebenen Bedeutungen haben und p für eine Zahl von 1 bis 4 steht, oder

einen Rest der Formel (X)

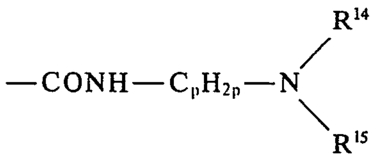 (X)

worin $R^{14}$ und $R^{15}$ gleich oder verschieden sind und für Alkyl mit 1 bis 4, vorzugsweise 1 oder 2, Kohlenstoffatomen stehen, oder die quaternierten Reste der Formeln IX und (X) bedeutet, besteht.

5. Vernetzbare, wasserlösliche Polymer-Zusammensetzung gemäß den Ansprüchen 1 und 2, enthaltend ein wasserlösliches Homo- oder Copolymerisat, das Carbonamidgruppen aufweist in einer Menge von mindestens 10% bezogen auf das Gewicht des Polymerisats und eine bis-Formylamidoverbindung der Formel I

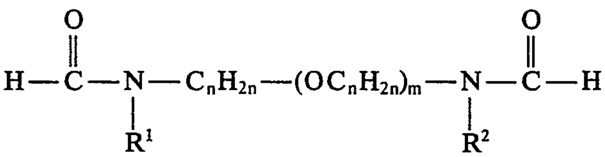 (I)

worin $R^1$ und $R^2$ Wasserstoff, Alkyl mit 1 bis 4 C-Atomen oder $-CH_2OH$ bedeuten.

6. Verfahren zur Herstellung einer vernetzten Polymer-Zusammensetzung, die vernetzende Brückenglieder der Formel $-NR^x-CH=N-CO-$ aufweist, dadurch gekennzeichnet, daß man eine Komponente A, die im Molekül mindestens 10%, bezogen auf das Gewicht des Polymerisats, Carbonamidgruppen aufweist und eine Komponente B, die im Molekül mindestens zwei Formylamidogruppen aufweist, in saurem, wäßrigem Medium miteinander reagieren läßt, wobei die Komponente B nicht ein Carbonamidgruppen und Formylamidogruppen aufweisendes, mit der Komponente A identisches Copolymerisat ist.

7. Verfahren gemäß Anspruch 6, dadurch gekennzeichnet, daß die Komponente A ein Homo- oder Copolymerisat ist, das Carbonamidgruppen enthält, in einer Menge von mindestens 10% bezogen auf das Gewicht des Polymerisats und die Komponente B eine bis-Formylamidoverbindung der Formel I

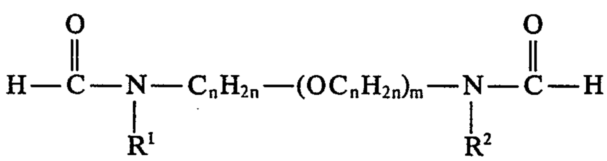 (I)

worin $R^1$ und $R^2$ Wasserstoff, Alkyl mit 1 bis 4 C-Atomen oder $-CH_2OH$ bedeuten.

8. Verfahren gemäß Anspruch 6, dadurch gekennzeichnet, daß die Komponente A ein Homo- oder Copolymerisat ist, das Carbonamidgruppen enthält und die Komponente B ein Homo- oder Copolymerisat ist, das Formylamidogruppen der Formel

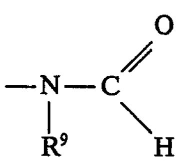

enthält, worin $R^9$ Wasserstoff, Alkyl mit 1 bis 4 C-Atomen oder $CH_2OH$ ist.

9. Verwendung der gemäß den Ansprüchen 6 bis 8 hergestellten vernetzten Polymer-Zusammensetzungen als Verdicker für wäßrige Säuren.

10. Hochviskose wäßrige Säure-Zubereitung bestehend aus einer wäßrigen Lösung von 70 bis 99,8 Gew.-% einer Säure und 30 bis 0,2 Gew.-% einer gemäß den Ansprüchen 6 bis 8 hergestellten vernetzten Copolymer-Zusammensetzung.

11. Verfahren zur Stimulierung von Erdöl- bzw. Erdgasbohrungen durch Drucksäuerung mit einer verdickten Säure, dadurch gekennzeichnet, daß eine verdickte Säure eingesetzt wird, die als Verdicker eine gemäß den Ansprüchen 6 bis 8 hergestellte vernetzte Polymerzusammensetzung enthält.

**Claims for the Contracting States: BE, CH, DE, FR, LI, NL**

1. Crosslinkable, water-soluble polymer composition containing a polymeric compound which has at least 10%, relative to the weight of the polymer, of carbonamide groups in its molecule, and a compound which has at least two formylamido groups in its molecule, in a weight ratio of 1 : 0.2 to 1 : 20, the carbonamide groups and the formylamido groups reacting with one another in an aqueous medium in the presence of acid with the formation of bridge members which effect crosslinking and have the formula $-NR^x-CH=N-CO-$ wherein $R^x$ denotes hydrogen, alkyl having 1 to 4 C atoms or $-CH_2OH$, with the exception of such crosslinkable, water-soluble polymer compositions in which the polymer compound comprising carbonamide groups and the polymer compound comprising formylamido groups are identical copolymers comprising carbonamide groups and formylamido groups.

2. Crosslinkable, water-soluble polymer composition according to Claim 1 containing

A) a water-soluble homopolymer or copolymer having carbonamide groups in an amount of at least 10%, relative to the weight of the polymer, and

B) a) a compound of the formula I

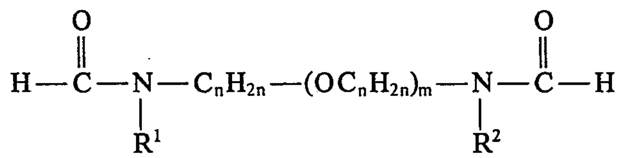

(I)

wherein

$R^1$ and $R^2$ denote hydrogen, alkyl having 1 to 4 C atoms or $-CH_2OH$,
n denotes a number from 1 to 3 and
m denotes the number 0 or 1,

and/or

b) a water-soluble homopolymer or copolymer which contains formylamido groups of the formula

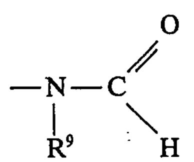

in an amount of at least 1 mol per 500 g of the polymer, $R^9$ denoting hydrogen, alkyl having 1 to 4 C atoms or $-CH_2OH$.

3. Crosslinkable, water-soluble polymer composition according to Claim 2, in which the component A consists of 50 to 100% by weight of units of the formula II

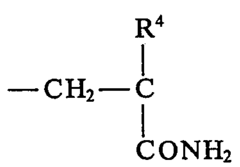

(II)

wherein $R^4$ represents hydrogen or methyl, and 0 to 50% by weight of units of the formula III

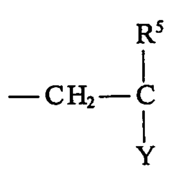

(III)

wherein

$R^5$ represents hydrogen or alkyl having 1 to 3 carbon atoms, preferably hydrogen or methyl, and
Y represents: formylamido; N-substituted formylamido wherein the N-substituent is methyl or hydroxymethyl; cyano; carboxyl or an alkali metal or ammonium salt thereof; alkoxycarbonyl having 1 to 6, preferably 1 to 3, carbon atoms; hydroxycarbonyl having 1 to 3 carbon atoms; N-methylolcarbonamide of the formula $HOCH_2NH-CO-$ in which the methylol group is optionally etherified with alkanols having 1 to 4 carbon atoms; alkanoylamino which has 1 to 4 carbon atoms and which can optionally be N-substituted by methylol or alkyl having 1 to 4 carbon atoms;

1-pyrrolidonyl; phenyl; pyridinium; the sulphonic acid group; sulphoalkylcarbonamide having 1 to 4 carbon atoms; the phosphonic acid group, it being possible for the sulphonic acid and phosphonic acid groups also to be present in the form of their alkali metal or ammonium salts;

a radical of the formula IV

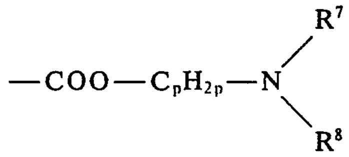

(IV)

or a radical of the formula V

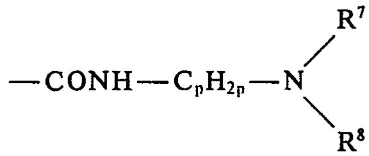

(V)

it being also possible for the radicals of the formulae IV and V to be quaternised, for example by reaction with $CH_3-Cl$ or dimethyl sulphate, and $R^7$ and $R^8$ being identical or different and representing alkyl having 1 to 4, preferably 1 or 2, carbon atoms, and p denoting a number from 1 to 4.

4. Crosslinkable, water-soluble polymer composition according to Claim 2, in which the component B is a copolymer which consists of 50—100% by weight of units of the formula VI

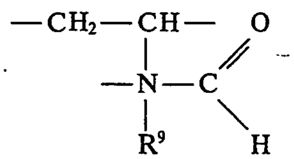

(VI)

wherein $R^9$ represents hydrogen, methyl or hydroxymethyl and 0—50% by weight of units of the formula VII

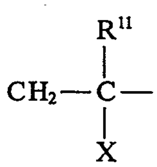

(VII)

wherein

$R^{11}$ represents hydrogen or methyl and

X denotes cyano; carboxyl or alkyli metal or ammonium salts thereof; alkoxycarbonyl having 1 to 6, preferably 1 to 3, carbon atoms; hydroxyalkoxycarbonyl having 1 to 3 carbon atoms; carbonamide; N-methylolcarbonamide of the formula $HOCH_2NH-CO-$ in which the methylol group can optionally be etherified with alkanols having 1 to 4 carbon atoms; alkanoylamino which has 1 to 4 carbon atoms and which can be N-substituted by methylol or alkyl having 1 to 4 carbon atoms; 1-pyrrolidonyl; phenyl; pyridinium; the sulphonic acid group; sulphoalkylcarbonamide having 1 to 4 carbon atoms; the phosphonic acid group, it being possible for sulphonic and phosphonic acid groups also to be present in the form of their alkali metal or ammonium salts;

a radical of the formula VIII

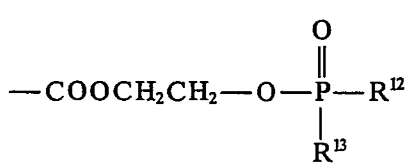

(VIII)

wherein $R^{12}$ and $R^{13}$ are identical or different and represent alkyl having 1 to 4, preferably 1 or 2, carbon atoms; a radical of the formula IX

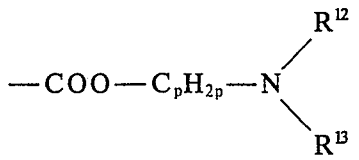

(IX)

wherein $R^{12}$ and $R^{13}$ have the abovementioned meanings and p represents a number from 1 to 4; or a radical of the formula X

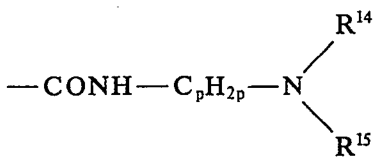

(X)

wherein $R^{14}$ and $R^{15}$ are identical or different and represent alkyl having 1 to 4, preferably 1 or 2, carbon atoms; or X denotes the quaternised radicals of the formulae IX and X, and p has the abovementioned meaning.

5. Crosslinkable, water-soluble polymer composition according to Claims 1 and 2, containing a water-soluble homopolymer or copolymer having carbonamide groups in an amount of at least 10%, relative to the weight of the polymer, and a bis-formylamido compound of the formula I

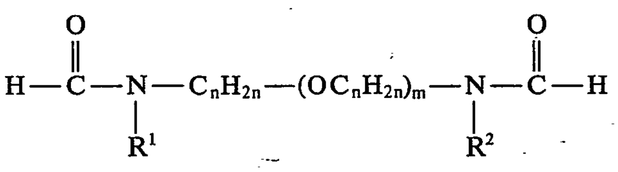

(I)

wherein $R^1$ and $R^2$ denote hydrogen, alkyl having 1 to 4 C atoms or $-CH_2OH$.

6. Process for preparing a crosslinked polymer composition comprising crosslinking bridge members of the formula $-NR^x-CH=N-CO-$, characterised in that a component A, which contains in the molecule at least 10%, relative to the weight of the polymer, carbonamide groups, and a component B, which contains at least two formylamido groups in the molecule, are allowed to react with one another in an acid, aqueous medium, component B not being a copolymer which comprises carbonamide groups and formylamido groups and is identical with component A.

7. Process according to Claim 6, characterised in that the component A is a homopolymer or copolymer which contains carbonamide groups in an amount of at least 10% relative to the weight of the polymer, and that the component B is a bis-formylamido compound of the formula I

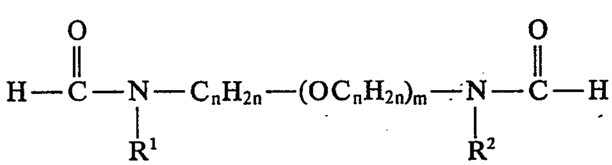

(I)

wherein $R^1$ and $R^2$ denote hydrogen, alkyl having 1 to 4 carbon atoms or $-CH_2OH$.

8. Process according to Claim 6, characterised in that the component A is a homopolymer or copolymer which contains carbonamide groups and the component B is a homopolymer or copolymer which contains formylamido groups of the formula

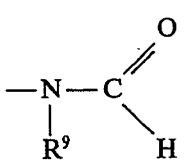

wherein $R^9$ denotes hydrogen, alkyl having 1 to 4 carbon atoms or $-CH_2OH$.

9. Crosslinkable, water-soluble polymer composition, characterised in that the crosslinking bridges of the formula $-NR^x-CH=N-CO-$, where $R^x$ is hydrogen, alkyl having 1 to 4 carbon atoms or $-CH_2OH$, and the molecules linked via the crosslinking bridges are not identical polymer molecules.

10. Crosslinked polymer composition, obtained by reacting carbonamide groups of a component A with formylamino groups of a component B in a strongly acid aqueous medium, the component

A) being a water-soluble homopolymer or copolymer having carbonamide groups in an amount of at least 10%, relative to the weight of the polymer, and the component

B) a) being a compound of the formula I

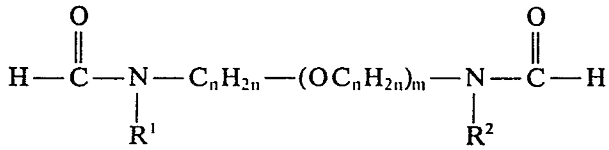

(I)

wherein

$R^1$ and $R^2$ denote hydrogen, alkyl having 1 to 4 C atoms or $-CH_2OH$,
n denotes a number from 1 to 3 and
m denotes the number 0 or 1,

and/or

b) a water-soluble homopolymer or copolymer which contains formylamido groups of the formula

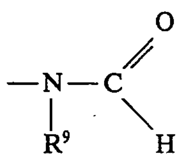

in an amount of at least 1 mol per 500 g of the polymer, $R^9$ denoting hydrogen, alkyl having 1 to 4 C atoms or $-CH_2OH$, component Bb not being a copolymer which is identical with component A and comprises carbonamide groups and formylamido groups.

11. The use of the crosslinked polymer compositions of Claim 9 or 10 as thickeners for aqueous acids.

12. Highly viscous, aqueous acid preparation consisting of an aqueous solution of 70 to 99.8% by weight of an acid and 30 to 0.2% by weight of a crosslinked copolymer composition of Claim 9 or 10.

13. Process for stimulating petroleum or natural gas boreholes by fracture-acidising with a thickened acid, characterised in that a thickened acid containing, as the thickener, a crosslinked polymer composition according to Claim 9 or 10, is employed.

**Claims for the Contracting State: AT**

1. Crosslinkable, water-soluble polymer composition containing a polymeric compound which has at least 10%, relative to the weight of the polymer, of carbonamide groups in its molecule, and a compound which has at least two formylamido groups in its molecule, in a weight ratio of 1 : 0.2 to 1 : 20, the carbonamide groups and the formylamido groups reacting with one another in an aqueous medium in the presence of acid with the formation of bridge members which effect crosslinking and have the formula $-NR^x-CH=N-CO-$ wherein $R^x$ denotes hydrogen, alkyl having 1 to 4 C atoms or $-CH_2OH$, with the exception of such crosslinkable, water-soluble polymer compositions in which the polymer compound comprising carbonamide groups and the polymer compound comprising formylamido groups are identical copolymers comprising carbonamide groups and formylamido groups.

2. Crosslinkable, water-soluble polymer composition according to Claim 1 containing

A) a water-soluble homopolymer or copolymer having carbonamide groups in an amount of at least 10%, relative to the weight of the polymer, and

B) a) a compound of the formula I

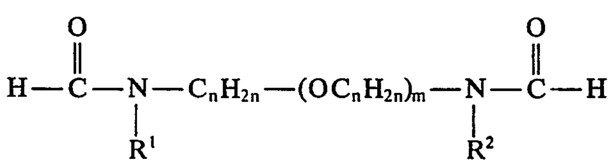

(I)

wherein

$R^1$ and $R^2$ denote hydrogen, alkyl having 1 to 4 C atoms or $-CH_2OH$,
n denotes a number from 1 to 3 and
m denotes the number 0 or 1,

and/or

b) a water-soluble homopolymer or copolymer which contains formylamido groups of the formula

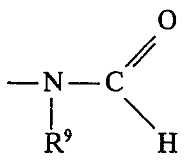

in an amount of at least 1 mol per 500 g of the polymer, $R^9$ denoting hydrogen, alkyl having 1 to 4 C atoms or $-CH_2OH$.

3. Crosslinkable, water-soluble polymer composition according to Claim 2, in which the component A consists of 50 to 100% by weight of units of the formula

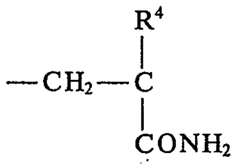

(II)

wherein $R^4$ represents hydrogen or methyl, and 0 to 50% by weight of units of the formula III

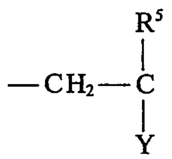

(III)

wherein

$R^5$ represents hydrogen or alkyl having 1 to 3 carbon atoms, preferably hydrogen or methyl, and

Y represents: formylamido; N-substituted formylamido wherein the N-substituent is methyl or hydroxymethyl; cyano; carboxyl or an alkali metal or ammonium salt thereof; alkoxycarbonyl having 1 to 6, preferably 1 to 3, carbon atoms; hydroxycarbonyl having 1 to 3 carbon atoms; N-methylolcarbonamide of the formula $HOCH_2NH-CO-$ in which the methylol group is optionally etherified with alkanols having 1 to 4 carbon atoms; alkanoylamino which has 1 to 4 carbon atoms and which can optionally be N-substituted by methylol or alkyl having 1 to 4 carbon atoms; 1-pyrrolidonyl; phenyl; pyridinium; the sulphonic acid group; sulphoalkylcarbonamide having 1 to 4 carbon atoms; the phosphonic acid group, it being possible for the sulphonic acid and phosphonic acid groups also to be present in the form of their alkali metal or ammonium salts;

a radical of the formula IV

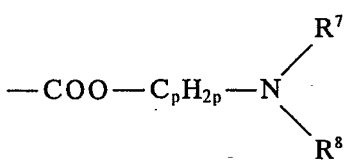

(IV)

or a radical of the formula V

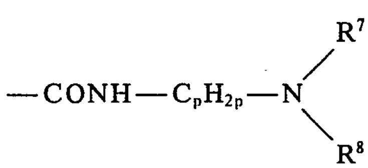

(V)

it being also possible for the radicals of the formulae IV and V to be quaternised, for example by reaction with $CH_3-Cl$ or dimethyl sulphate, and $R^7$ and $R^8$ being identical or different and representing alkyl having 1 to 4, preferably 1 or 2, carbon atoms, and p denoting a number from 1 to 4.

4. Crosslinkable, water-soluble polymer composition according to Claim 2, in which the component B is a copolymer which consists of 50–100% by weight of units of the formula VI

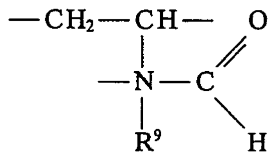

(VI)

wherein $R^9$ represents hydrogen, methyl or hydroxymethyl and 0—50% by weight of units of the formula VII

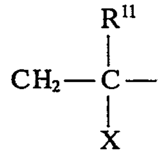

(VII)

wherein

$R^{11}$ represents hydrogen or methyl and

X denotes cyano; carboxyl or alkyli metal or ammonium salts thereof; alkoxycarbonyl having 1 to 6, preferably 1 to 3, carbon atoms; hydroxyalkoxycarbonyl having 1 to 3 carbon atoms; carbonamide; N-methylolcarbonamide of the formula $HOCH_2NH—CO—$ in which the methylol group can optionally be etherified with alkanols having 1 to 4 carbon atoms; alkanoylamino which has 1 to 4 carbon atoms and which can be N-substituted by methylol or alkyl having 1 to 4 carbon atoms; 1-pyrrolidonyl; phenyl; pyridinium; the sulphonic acid group; sulphoalkylcarbonamide having 1 to 4 carbon atoms; the phosphonic acid group, it being possible for sulphonic and phosphonic acid groups also to be present in the form of their alkali metal or ammonium salts;

a radical of the formula VIII

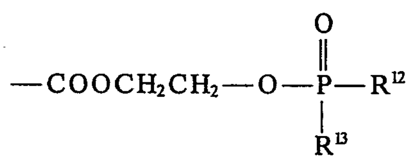

(VIII)

wherein $R^{12}$ and $R^{13}$ are identical or different and represent alkyl having 1 to 4, preferably 1 or 2, carbon atoms; a radical of the formula IX

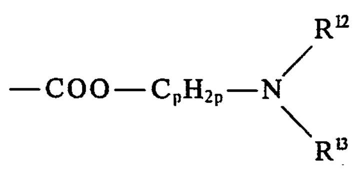

(IX)

wherein $R^{12}$ and $R^{13}$ have the abovementioned meanings and p represents a number from 1 to 4; or a radical of the formula X

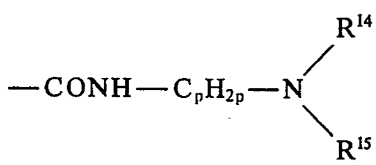

(X)

wherein $R^{14}$ and $R^{15}$ are identical or different and represent alkyl having 1 to 4, preferably 1 or 2, carbon atoms; or X denotes the quaternised radicals of the formulae IX and X, and p has the abovementioned meaning.

5. Crosslinkable, water-soluble polymer composition according to Claims 1 and 2, containing a water-soluble homopolymer or copolymer having carbonamide groups in an amount of at least 10%, relative to the weight of the polymer, and a bis-formylamido compound of the formula I

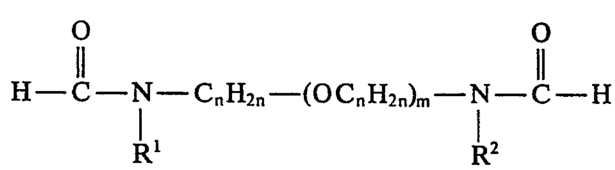

(I)

wherein $R^1$ and $R^2$ denote hydrogen, alkyl having 1 to 4 C atoms or $-CH_2OH$.

6. Process for preparing a crosslinked polymer composition comprising crosslinking bridge members of the formula $-NR^x-CH=N-CO-$, characterised in that a component A, which contains in the molecule at least 10%, relative to the weight of the polymer, carbonamide groups, and a component B, which contains at least two formylamido groups in the molecule, are allowed to react with one another in an acid, aqueous medium, component B not being a copolymer which comprises carbonamide groups and formylamido groups and is identical with component A.

7. Process according to Claim 6, characterised in that the component A is a homopolymer or copolymer which contains carbonamide groups in an amount of at least 10% relative to the weight of the polymer, and that the component B is a bis-formylamido compound of the formula I

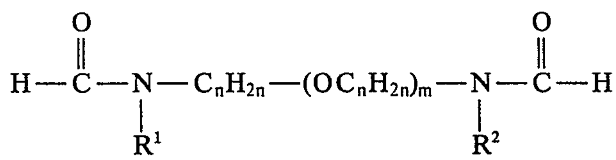

(I)

wherein $R^1$ and $R^2$ denote hydrogen, alkyl having 1 to 4 carbon atoms or $-CH_2OH$.

8. Process according to Claim 6, characterised in that the component A is a homopolymer or copolymer which contains carbonamide groups and the component B is a homopolymer or copolymer which contains formylamido groups of the formula

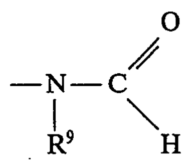

wherein $R^9$ denotes hydrogen, alkyl having 1 to 4 carbon atoms or $-CH_2OH$.

9. The use of the crosslinked polymer compositions prepared according to Claims 6 to 8 as thickeners for aqueous acids.

10. Highly viscous, aqueous acid preparation consisting of an aqueous solution of 70 to 99.8% by weight of an acid and 30 to 0.2% by weight of a crosslinked copolymer composition prepared according to Claims 6 to 8.

11. Process for stimulating petroleum or natural gas boreholes by fracture-acidising with a thickened acid, characterised in that a thickened acid containing, as the thickener, a crosslinked polymer composition prepared according to Claims 6 to 8, is employed.

**Revendications pour les Etats contractants: BE, CH, DE, FR, LI, NL**

1. Composition réticulable et hydrosoluble à base de polymères, qui contient un composé polymère renfermant, dans sa molécule, au moins 10% de radicaux carbamoyles par rapport au poids du polymère, et un composé renfermant, dans sa molécule, au moins deux radicaux formylamino, dans un rapport pondéral compris entre 1 :0,2 et 1 :20, les radicaux carbamoyles et les radicaux formylamino réagissant les uns avec les autres en milieu aqueux en présence d'un acide en formant des ponts de formule $-NR^x-CH=N-CO-$ dans lesquels $R^x$ représente l'hydrogène, un alkyle contenant de 1 à 4 atomes de carbone ou un radical $-CH_2OH$, lesdits ponts assurant la réticulation, à l'exception des compositions à base de polymères, réticulables et hydrosolubles, dans lesquelles le composé polymère porteur de radicaux carbamoyles et le composé porteur de radicaux formylamino sont des copolymères identiques porteurs de radicaux carbamoyles et de radicaux formylamino.

2. Composition à base de polymères, réticuble et hydrosoluble, selon la revendication 1, qui contient:

A) un homopolymère ou copolymère hydrosoluble porteur de radicaux carbamoyle en une quantité d'au moins 10% par rapport au poids du polymère, et

B) a) un composé répondant à la formule I:

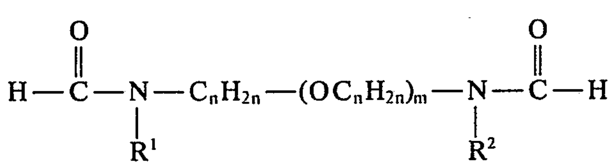

(I)

dans laquelle

$R^1$ et $R^2$ représentent chacun l'hydrogène, un alkyle contenant de 1 à 4 atomes de carbone ou un radical $-CH_2OH$,

n représente un nombre de 1 à 3 et

m représente le nombre 0 ou le nombre 1

et/ou

b) un homopolymère ou copolymère hydrosoluble qui porte des radicaux formylamino répondant à la formule

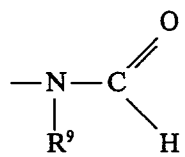

dans laquelle $R^9$ représente l'hydrogène, un radical alkyle contenant de 1 à 4 atomes de carbone ou un radical $-CH_2OH$, en une quantité d'au moins 1 mol pour 500 g du polymère.

3. Composition à base de polymères, réticulable et hydrosoluble, selon la revendication 2, dont la composante A est constituée, pour 50 à 100% en poids, de motifs répondant à la formule II:

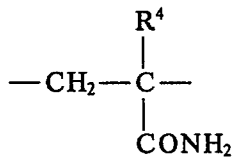

(II)

dans laquelle $R^4$ représente l'hydrogène ou un méthyle, et, pour 0 à 50% en poids, de motifs répondant à la formule III:

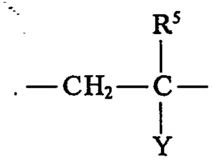

(III)

dans laquelle

$R^5$ représente l'hydrogène ou un alkyle contenant de 1 à 3 atomes de carbone, de préférence l'hydrogène ou un méthyle, et

Y représente un formylamino; un formylamino dont l'azote porte un substituant, en l'espèce un méthyle ou un hydroxyméthyle; un cyano; un carboxy ou l'un de ses sels de métaux alcalins ou d'ammonium; un alcoxycarbonyle contenant de 1 à 6 atomes de carbone, de préférence de 1 à 3; un hydroxyalcoxy-carbonyle contenant de 1 à 3 atomes de carbone; un N-méthylol-carbamoyle de formule $HOCH_2NH-CO-$, dont le radical méthylol est éventuellement éthérifié par un alcanol contenant de 1 à 4 atomes de carbone; un alcanoylamino qui contient de 1 à 4 atomes de carbone et dont l'atome d'azote peut éventuellement porter un méthylol ou un alkyle en $C_1-C_4$; un pyrrolidonyle-1; un phényle; un pyridinium; un radical sulfo; un radical sulfoalkylcarbamoyle contenant de 1 à 4 atomes de carbone; un radical phospho, les radicaux sulfo et phospho pouvant également être sous la forme de leurs sels de métaux alcalins ou d'ammonium;

un radical de formule IV

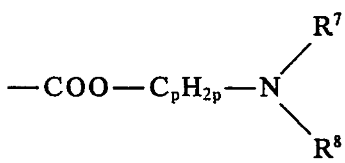

(IV)

ou un radical de formule V

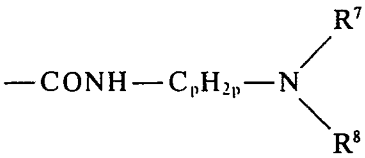

(V)

(les radicaux de formules IV et V peuvent également être quaternisés; par exemple par réaction avec $CH_3-Cl$ ou avec le sulfate de diméthyle), formules dans lesquelles $R^7$ et $R^8$ sont identiques ou différents et représentent chacun un alkyle contenant de 1 à 4 atomes de carbone, de préférence 1 ou 2, et p représente un nombre de 1 à 4.

4. Composition à base de polymères, réticulable et hydrosoluble, selon la revendication 2, dont la composante B est un copolymère constitué, pour 50 à 100% en poids, de motifs répondant à la formule VI:

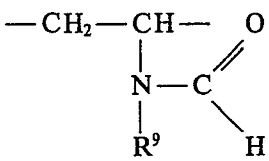

(VI)

dans laquelle $R^9$ représente l'hydrogène, un méthyle ou un hydroxyméthyle, et, pour 0 à 50% en poids, de motifs répondant à la formule VII:

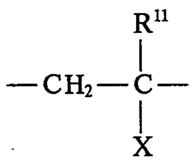

(VII)

dans laquelle

$R^{11}$ représente l'hydrogène ou un méthyle et

X représente un cyano; un carboxy ou l'un de ses sels de métaux alcalins ou d'ammonium; un alcoxycarbonyle contenant de 1 à 6 atomes de carbone, de préférence de 1 à 3; un hydroxyalcoxy-carbonyle contenant de 1 à 3 atomes de carbone; un carbamoyle; un N-méthylolcarbamoyle de formule $HOCH_2NH-CO-$, dont le radical méthylol peut éventuellement être éthérifié par un alcanol contenant de 1 à 4 atomes de carbone; un alcanoylamino qui contient de 1 à 4 atomes de carbone et dont l'atome d'azote peut porter un radical méthylol ou un radical alkyle contenant de 1 à 4 atomes de carbone; un pyrrolidonyle-1; un phényle; un pyridinium; un radical sulfo; un radical sulfoalkylcarbamoyle contenant de 1 à 4 atomes de carbone; un radical phospho, les radicaux sulfo et phospho pouvant également se trouver sous la forme de leurs sels de métaux alcalins ou d'ammonium;

un radical répondant à la formule VIII

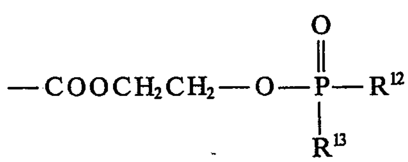

(VIII)

dans laquelle $R^{12}$ et $R^{13}$ sont identiques ou différents et représentent chacun un alkyle contenant de 1 à 4 atomes de carbone, de préférence 1 ou 2; un radical répondant à la formule IX:

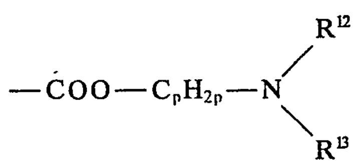

(IX)

dans laquelle $R^{12}$ et $R^{13}$ ont les significations qui viennent d'être données et p désigne un nombre de 1 à 4; ou un radical répondant à la formule X:

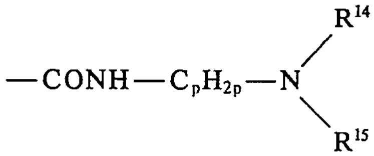

(X)

dans laquelle $R^{14}$ et $R^{15}$ sont identiques ou différents et réprésentent chacun un alkyle contenant de 1 à 4 atomes de carbone, de préférence 1 ou 2; ou un radical de formule IX ou X à l'état quaternisé.

5. Composition à base de polymères, réticulable et hydrosoluble, selon l'une des revendications 1 et 2, qui contient un homopolymère ou copolymère hydrosoluble renfermant des radicaux carbamoyles en une quantité d'au moins 10% par rapport au poids du polymère, et un composé bis-formylamino répondant à la formule I:

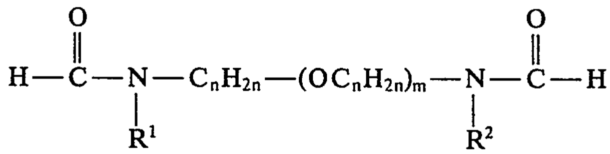

(I)

dans laquelle $R^1$ et $R^2$ représentent chacun l'hydrogène, un alkyle contenant de 1 à 4 atomes de carbone ou un radical $-CH_2OH$.

6. Procédé de préparation d'une composition à base de polymères réticulée qui contient des ponts réticulants de formule $-NR^x-CH=N-CO-$, procédé caractérisé en ce que qu'on fait réagir l'une avec l'autre, en milieu aqueux acide, une composante A dont la molécule contient au moins 10% de radicaux carbamoyles par rapport au poids du polymère et une composante B dont la molécule contient au moins deux radicaux formylamino, la composante B n'étant pas un copolymère porteur de radicaux carbamoyles et formylamino, identique à la composante A.

7. Procédé selon la revendication 6 caractérisé en ce que la composante A est un homopolymère ou copolymère renfermant des radicaux carbamoyles en une quantité d'au moins 10% par rapport au poids du polymère, et la composante B est un composé à deux radicaux formylamino qui répond à la formule I:

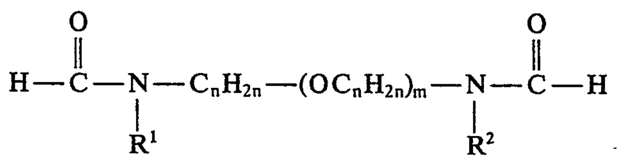

(I)

dans laquelle $R^1$ et $R^2$ représentent chacun l'hydrogène, un alkyle contenant de 1 à 4 atomes de carbone ou un radical $-CH_2OH$.

8. Procédé selon la revendication 6 caractérisé en ce que la composante A est un homopolymère ou copolymère contenant des radicaux carbamoyles et la composante B est un homopolymère ou copolymère qui contient des radicaux formylamino répondant à la formule:

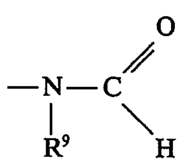

dans laquelle $R^9$ représente l'hydrogène, un alkyle contenant de 1 à 4 atomes de carbone ou un radical $-CH_2OH$.

9. Composition à base de polymères réticulée, caractérisée en ce que les ponts réticulants répondent à la formule:

$$-NR^x-CH=N-CO-$$

dans laquelle $R^x$ représente l'hydrogène, un alkyle contenant de 1 à 4 atomes de carbone ou un radical $-CH_2OH$, et les molécules reliées par les ponts réticulants ne sont pas des molécules polymères identiques.

10. Composition à base de polymères réticulée obtenue par réaction de radicaux carbamoyles d'une composante A avec radicaux formylamino d'une composante B, en milieu aqueux très acide, la composante

A) étant un homopolymère ou copolymère hydrosoluble qui contient des radicaux carbamoyles en une quantité de 10% par rapport au poids du polymère, et la composante

B) a) étant un composé répondant à la formule I:

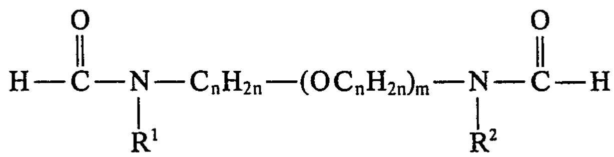

(I)

dans laquelle

$R^1$ et $R^2$ représentent chacun l'hydrogène, un alkyle contenant de 1 à 4 atomes de carbone ou un radical $-CH_2OH$,
n est un nombre de 1 à 3 et
m est un nombre égal à 0 ou à 1,

et/ou

b) étant un homopolymère ou copolymère hydrosoluble qui contient des radicaux formylamino répondant à la formule:

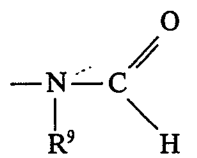

dans laquelle $R^9$ représente l'hydrogène, un alkyle contenant de 1 à 4 atomes de carbone ou un radical $-CH_2OH$, en une quantité d'au moins 1 mol pour 500 g du polymère, cette composante Bb n'étant pas un copolymère renfermant des radicaux carbamoyles et des radicaux formylamino, identique à la composante A.

11. Application des compositions à base de polymères réticulées selon l'une des revendications 9 et 10, ent tant qu'épaississants pour des acides aqueux.

12. Préparation acide aqueuse très visqueuse qui est constituée d'une solution aqueuse de 70 à 99,8% en poids d'un acide et de 30 à 0,2% en poids d'une composition à base de copolymères réticulée selon l'une des revendications 9 et 10.

13. Procédé pour stimuler des forages de pétrole ou de gaz naturel par acidification sous pression avec un acide épaissi, procédé caractérisé en ce qu'on utilise un acide épaissi qui contient, comme épaississant, une composition à base de polymères réticulée selon l'une des revendications 9 et 10.

**Revendications pour l'Etat contractant: AT**

1. Composition réticulable et hydrosoluble à base de polymères, qui contient un composé polymère renfermant, dans sa molécule, au moins 10% de radicaux carbamoyles par rapport au poids du polymère, et un composé renfermant, dans sa molécule, au moins deux radicaux formylamino, dans un rapport pondéral compris entre 1 : 0,2 et 1 : 20, les radicaux carbamoyles et les radicaux formylamino réagissant les uns avec les autres en milieu aqueux en présence d'un acide en formant des ponts de formule $-NR^x-CH=N-CO-$ dans lesquels $R^x$ représente l'hydrogène, un alkyle contenant de 1 à 4 atomes de carbone ou un radical $-CH_2OH$, lesdits ponts assurant la réticulation, à l'exception des compositions à base de polymères, réticulables et hydrosolubles, dans lesquelles le composé polymère porteur de radicaux carbamoyles et le composé porteur de radicaux formylamino sont des copolymères identiques porteurs de radicaux carbamoyles et de radicaux formylamino.

2. Composition à base de polymères, réticuble et hydrosoluble, selon la revendication 1, qui contient:

A) un homopolymère ou copolymère hydrosoluble porteur de radicaux carbamoyle en une quantité d'au moins 10% par rapport au poids du polymère, et

B) a) un composé répondant à la formule I:

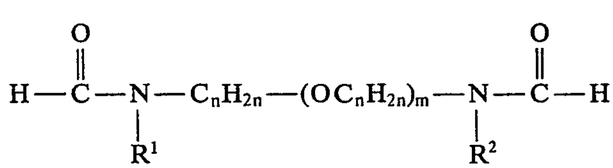

(I)

dans laquelle

$R^1$ et $R^2$ représentent chacun l'hydrogène, un alkyle contenant de 1 à 4 atomes de carbone ou un radical $-CH_2OH$,
n représente un nombre de 1 à 3 et
m représente le nombre 0 ou le nombre 1

et/ou

b) un homopolymère ou copolymère hydrosoluble qui porte des radicaux formylamino répondant à la formule

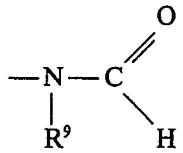

dans laquelle $R^9$ représente l'hydrogène, un radical alkyle contenant de 1 à 4 atomes de carbone ou un radical $-CH_2OH$, en une quantité d'au moins 1 mol pour 500 g du polymère.

3. Composition à base de polymères, réticulable et hydrosoluble, selon la revendication 2, dont la composante A est constituée, pour 50 à 100% en poids, de motifs répondant à la formule II:

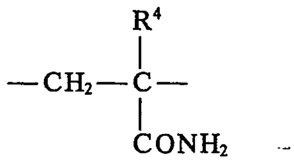

(II)

dans laquelle $R^4$ représente l'hydrogène ou un méthyle, et, pour 0 à 50% en poids, de motifs répondant à la formule III:

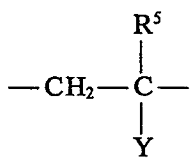

(III)

dans laquelle

$R^5$ représente l'hydrogène ou un alkyle contenant de 1 à 3 atomes de carbone, de préférence l'hydrogène ou un méthyle, et

Y représente un formylamino; un formylamino dont l'azote porte un substituant, en l'espèce un méthyle ou un hydroxyméthyle; un cyano; un carboxy ou l'un de ses sels de métaux alcalins ou d'ammonium; un alcoxycarbonyle contenant de 1 à 6 atomes de carbone, de préférence de 1 à 3; un hydroxyalcoxy-carbonyle contenant de 1 à 3 atomes de carbone; un N-méthylol-carbamoyle de formule $HOCH_2NH-CO-$, dont le radical méthylol est éventuellement éthérifié par un alcanol contenant de 1 à 4 atomes de carbone; un alcanoylamino qui contient de 1 à 4 atomes de carbone et dont l'atome d'azote peut éventuellement porter un méthylol ou un alkyle en $C_1-C_4$; un pyrrolidonyle-1; un phényle; un pyridinium; un radical sulfo; un radical sulfoalkylcarbamoyle contenant de 1 à 4 atomes de carbone; un radical phospho, les radicaux sulfo et phospho pouvant également être sous la forme de leurs sels de métaux alcalins ou d'ammonium;

un radical de formule IV

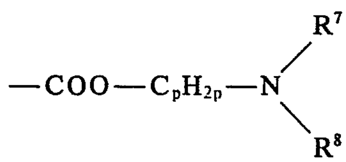

(IV)

ou un radical de formule V

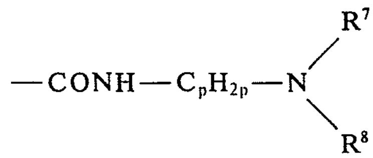

(V)

(les radicaux de formules IV et V peuvent également être quaternisés; par exemple par réaction avec $CH_3-Cl$ ou avec le sulfate de diméthyle), formules dans lesquelles $R^7$ et $R^8$ sont identiques ou différents et représentent chacun un alkyle contenant de 1 à 4 atomes de carbone, de préférence 1 ou 2, et p représente un nombre de 1 à 4.

4. Composition à base de polymères, réticulable et hydrosoluble, selon la revendication 2, dont la composante B est un copolymère constitué, pour 50 à 100% en poids, de motifs répondant à la formule VI:

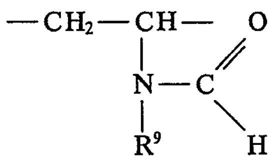

(VI)

dans laquelle $R^9$ représente l'hydrogène, un méthyle ou un hydroxyméthyle, et, pour 0 à 50% en poids, de motifs répondant à la formule VII:

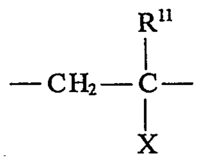

(VII)

dans laquelle

$R^{11}$ représente l'hydrogène ou un méthyle et

X représente un cyano; un carboxy ou l'un de ses sels de métaux alcalins ou d'ammonium; un alcoxycarbonyle contenant de 1 à 6 atomes de carbone, de préférence de 1 à 3; un hydroxyalcoxy-carbonyle contenant de 1 à 3 atomes de carbone; un carbamoyle; un N-méthylolcarbamoyle de formule $HOCH_2NH-CO-$, dont le radical méthylol peut éventuellement être éthérifié par un alcanol contenant de 1 à 4 atomes de carbone; un alcanoylamino qui contient de 1 à 4 atomes de carbone et dont l'atome d'azote peut porter un radical méthylol ou un radical alkyle contenant de 1 à 4 atomes de carbone; un pyrrolidonyle-1; un phényle; un pyridinium; un radical sulfo; un radical sulfoalkylcarbamoyle contenant de 1 à 4 atomes de carbone; un radical phospho, les radicaux sulfo et phospho pouvant également se trouver sous la forme de leurs sels de métaux alcalins ou d'ammonium;

un radical répondant à la formule VIII

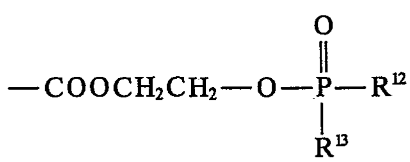

(VIII)

dans laquelle $R^{12}$ et $R^{13}$ sont identiques ou différents et représentent chacun un alkyle contenant de 1 à 4 atomes de carbone, de préférence 1 ou 2; un radical répondant à la formula IX:

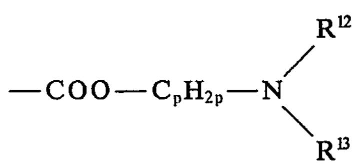

(IX)

dans laquelle $R^{12}$ et $R^{13}$ ont les significations qui viennent d'être données et p désigne un nombre de 1 à 4; ou un radical répondant à la formule X:

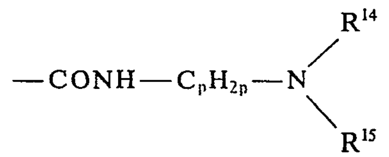

(X)

dans laquelle $R^{14}$ et $R^{15}$ sont identiques ou différents et répésentent chacun un alkyle contenant de 1 à 4 atomes de carbone, de préférence 1 ou 2; ou un radical de formule IX ou X à l'état quaternisé.

5. Composition à base de polymères, réticulable et hydrosoluble, selon l'une des revendications 1 et 2, qui contient un homopolymère ou copolymère hydrosoluble renfermant des radicaux carbamoyles en une quantité d'au moins 10% par rapport au poids du polymère, et un composé bis-formylamino répondant à la formule I:

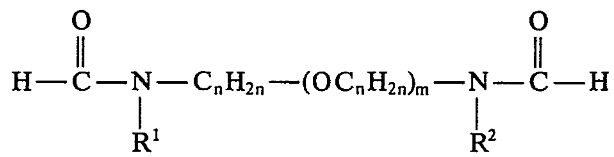

(I)

dans laquelle $R^1$ et $R^2$ représentent chacun l'hydrogène, un alkyle contenant de 1 à 4 atomes de carbone ou un radical $-CH_2OH$.

6. Procédé de préparation d'une composition à base de polymères réticulée qui contient des ponts réticulants de formule $-NR^x-CH{=}N-CO-$, procédé caractérisé en ce que qu'on fait réagir l'une avec l'autre, en milieu aqueux acide, une composante A dont la molécule contient au moins 10% de radicaux carbamoyles par rapport au poids du polymère et une composante B dont la molécule contient au moins deux radicaux formylamino, la composante B n'étant pas un copolymère porteur de radicaux carbamoyles et formylamino, identique à la composante A.

7. Procédé selon la revendication 6 caractérisé en ce que la composante A est un homopolymère ou copolymère renfermant des radicaux carbamoyles en une quantité d'au moins 10% par rapport au poids du polymère, et la composante B est un composé à deux radicaux formylamino qui répond à la formule I:

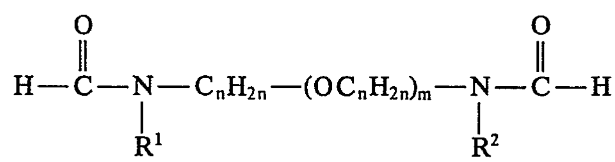

(I)

dans laquelle $R^1$ et $R^2$ représentent chacun l'hydrogène, un alkyle contenant de 1 à 4 atomes de carbone ou un radical $-CH_2OH$.

8. Procédé selon la revendication 6 caractérisé en ce que la composante A est un homopolymère ou copolymère contenant des radicaux carbamoyles et la composante B est un homopolymère ou copolymère qui contient des radicaux formylamino répondant à la formule:

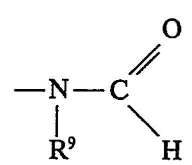

dans laquelle $R^9$ représente l'hydrogène, un alkyle contenant de 1 à 4 atomes de carbone ou un radical $-CH_2OH$.

9. Application des compositions à base de polymères réticulées selon l'une quelconque des revendications 6 à 8, comme épaississants pour aqueux.

10. Préparation acide aqueuse très visqueuse qui est constituée d'une solution aqueuse de 70 à 99,8% en poids d'un acide et de 30 à 0,2% en poids d'une composition à base de copolymères réticulée qui a été préparée selon l'une quelconque des revendications 6 à 8.

11. Procédé pour stimuler des forages de pétrole ou de gaz naturel par acidification sous pression avec un acide épaissi, procédé caractérisé en ce qu'on utilise un acide épaissi qui contient, comme épaississant, une composition à base de polymères réticulée préparée selon l'une quelconque des revendications 6 à 8.